# EUROPEAN PATENT APPLICATION

(11) **EP 4 576 885 A1**
(43) Date of publication of application: **25.06.2025**
(21) Application number: 24221050.8
(22) Date of filing: 18.12.2024
(51) Int. Cl.: H04W 52/02, H04W 84/12

(54) **POWER-SAVING OPERATIONS FOR NON-SIMULTANEOUS TRANSMISSION AND RECEPTION**

(30) Priority: 18.12.2023 US 202363611297 P
(71) Applicant: Comcast Cable Communications, LLC, Philadelphia, PA 19103 (US)
(72) Inventor: KIM, Jeongki, Philadelphia, 19103 (US); LANANTE, Leonardo Alisasis, Philadelphia, 19103 (US); DINAN, Esmael Hejazi, Philadelphia, 19103 (US); ERKUCUK, Serhat, Philadelphia, 19103 (US); BAYKAS, Tuncer, Philadelphia, 19103 (US); ZHANG, Jiayi, Philadelphia, 19103 (US)
(74) Representative: V.O.

(57) **Abstract**

Communication between an access point multi-link device and a non-access point multi-link device, of a multi-link pair using non-simultaneous transmission and reception, is through multiple communication links. Indications may be shared between the multi-link devices through the multiple communication links. For example, an indication may be shared by the access point multi-link device with the non-access point multi-link device on a first communication link to indicate that further traffic exists on a second communication link. Based on the indication, for example, the non-access point multi-link device may cause a multi-link device associated with the non-access point multi-link device to transition from a first power state to a second power state to prepare for the traffic.

## Description

### CROSS-REFERENCE TO RELATED APPLICATIONS

This application claims the benefit of U.S. Provisional Application No. 63/611,297, filed on December 18, 2023. The above referenced application is hereby incorporated by reference in its entirety.

### BACKGROUND

Multi-link communication devices are capable of operating over multiple communication links. A communication device in a doze state is unable to transmit or receive. A communication device that is configured for non-simultaneous transmission and reception remains in an awake state.

### SUMMARY

The following summary presents a simplified summary of certain features. The summary is not an extensive overview and is not intended to identify key or critical elements.

Communication between multi-link devices, of a multi-link pair, in non-simultaneous transmission and reception may comprise using multiple communication links. A communication link may be used by a multi-link device to indicate to another multi-link device, of a multi-link pair, that traffic exists for other communication links between the multi-link pair. An indication may be sent to a second multi-link device to transition from a first power state to a second power state. If the multi-link pair are in a non-simultaneous transmission and reception power saving operation, the multi-link pair may use a first link to indicate whether a second link of the multi-link pair, or other links in other multi-link pairs, are allowed to be in a power saving state. An indication may be sent to indicate to a non-access point multi-link device that an access point multi-link device has buffered data to send via a second link and that the non-access point multi-link device should be in a non-power saving state to receive the data. By coordinating power transitions between the access point multi-link device and the non-access point multi-link device, advantages may be achieved such as increased efficiency for data transmission and/or reduced power consumption.

These and other features and advantages are described in greater detail below.

### BRIEF DESCRIPTION OF THE DRAWINGS

Examples of several of the various embodiments of the present disclosure are described herein with reference to the drawings.
FIG. 1 shows example wireless communication networks.
FIG. 2 shows example devices in a communication network.
FIG. 3 shows an example format of a Medium Access Control (MAC) frame.
FIG. 4 shows an example of a Quality of Service (QoS) null frame indicating buffer status information.
FIG. 5 shows an example format of a physical layer (PHY) protocol data unit (PPDU).
FIG. 6 shows an example that includes buffer status reporting by stations (STAs), scheduling by an access point (AP) of uplink multi-user (MU) transmissions, and transmission of scheduled uplink transmissions by the STAs.
FIG. 7 shows an example reference model for a multi-link device (MLD).
FIG. 8 shows an example of an AP MLD and an associated non-AP MLD.FIG. 9 shows an example of a multi-link setup between an AP MLD and a non-AP MLD.
FIG. 10 shows an example of a traffic identifier (TID)-to-link mapping in a multi-link communication environment.
FIGS. 11 and 12 show examples of some non-simultaneous transmit and receive (NSTR) operations.
FIG. 13 shows an example of an NSTR power save (PS) operation.
FIG. 14 shows another example of an NSTR PS operation.
FIG. 15 shows a problem that may arise in an NSTR PS operation of FIG. 14.
FIGS. 16-21 show examples of an NSTR PS mode.
FIG. 22 shows an example of another NSTR PS mode.
FIGS. 23-25 show examples of a further NSTR PS mode.
FIGS. 26-27 show example processes.
FIG. 28 shows an example of an AP MDL having only non-low latency traffic or only higher priority traffic to send to a STA MLD via a link.
FIG. 29 shows example elements of a computing device that may be used to implement any of the various devices described herein.

### DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

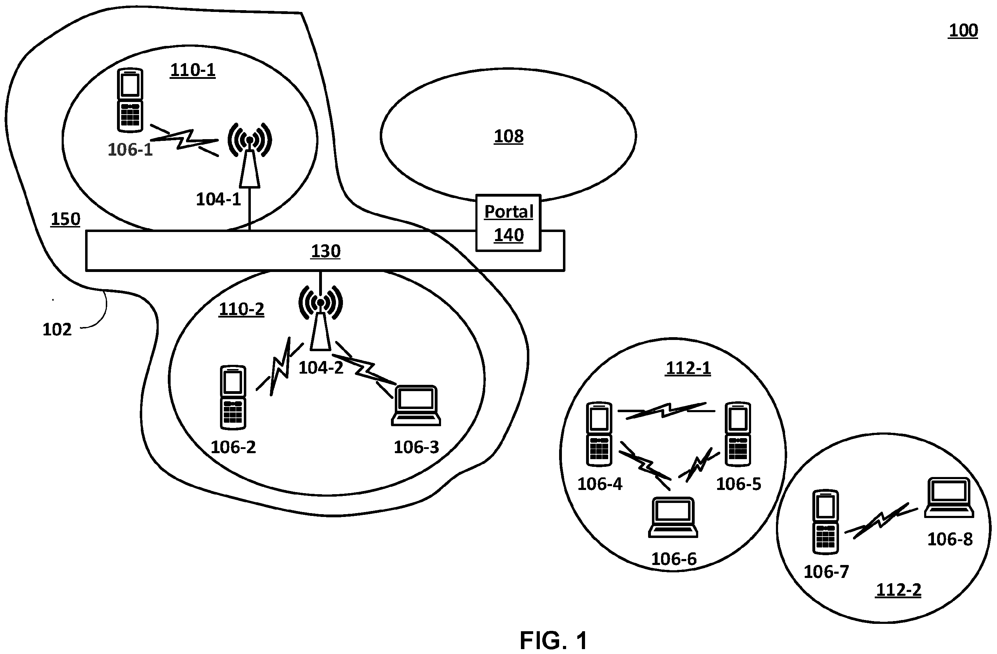

FIG. 1 shows example wireless communication networks. The example wireless communication networks may be a wireless local area network (WLAN) 102. The WLAN 102 may comprise an Institute of Electrical and Electronic Engineers (IEEE) 802.11 infra-structure network, or any other type of communication network. The WLAN 102 may comprise one or more basic service sets (BSSs) 110-1 and 110-2. BSSs 110-1 and 110-2 may each include a set of an access point (AP or AP station) and at least one station (station or non-AP station). For example, BSS 110-1 includes an AP 104-1 and a station 106-1, and BSS 110-2 includes an AP 104-2 and stations 106-2 and 106-3. The AP and the at least one station in a BSS may be configured to perform an association procedure to communicate with each other.

The WLAN 102 may comprise a distribution system (DS) 130. DS 130 may be configured to connect BSS 110-1 and BSS 110-2. DS 130 may enable an extended service set (ESS) 150 by being configured to connect BSS 110-1 and BSS 110-2. The ESS 150 may be a network comprising one or more APs (e.g., APs 104-1 and AP 104-2) that may be connected via the DS 130. The APs included in ESS 150 may have the same service set identification (SSID). WLAN 102 may be coupled to one or more external networks. For example, WLAN 102 may be connected to another network 108 (e.g., 802.X) via a portal 140. Portal 140 may function as a bridge connecting DS 130 of WLAN 102 with the other network 108.

The example wireless communication networks may also, or alternatively, comprise one or more ad-hoc networks and/or independent BSSs (IBSSs). For example, FIG. 1 shows example IBSSs, where stations 106-4, 106-5 and 106-6 may be configured to form a first IBSS 112-1 and stations 106-7 and 106-8 may be configured to form a second IBSS 112-2. An ad-hoc network and/or IBSS is a network that includes a plurality of stations without a centralized communication device, such as an AP. The plurality of stations may be configured to communicate without requiring the presence of an AP. For example, the plurality of stations in the IBSS may communicate with each other using peer-to-peer communication (e.g., not via an AP). IBSSs do not include a centralized management entity (e.g., an AP) configured to perform a centralized management. stations within an IBSS are managed in a distributed manner. stations forming an IBSS may be fixed and/or mobile. The stations (e.g., stations 106-4, 106-5, 106-6, 106-7, 106-8) may or may not be permitted to access the DS 130 to constitute a self-contained network.

A station may comprise one or more layers in accordance with the open systems interconnection (OSI) model. For example, stations may comprise a medium access control (MAC) layer that may be in accordance with a defined standard (e.g., an IEEE 802.11 standard, or any other standard). A physical (PHY) layer interface for a radio medium may include the APs and the non-AP stations (stations). The station may comprise one or more of a computing device, a mobile terminal, a wireless device, a wireless transmit/receive unit (WTRU), user equipment (UE), a mobile station (MS), a mobile subscriber unit, and/or a user device. For example, with respect to wireless LAN communications, a device participating in uplink multi-user, multiple input, multiple output (MU-MIMO) and/or uplink orthogonal frequency division multiple access (OFDMA) transmission may be referred to as a station. stations may not be limited to only participating in wireless LAN communications, and may perform other types of communications, operations, and/or procedures.

A frequency band to be used for communication may include multiple sub-bands and/or frequency channels. For example, messages (e.g., data packets, physical layer protocol data units (PPDUs)) conforming to the IEEE 802.11 standard (e.g., IEEE 802.11n, 802.11ac, 802.11ax, 802.11be, etc., standards) may be sent (e.g., transmitted) over the 2.4, 5 GHz, and/or 6 GHz bands. Each of the bands may be divided into multiple 20 MHz channels. PPDUs conforming to the IEEE 802.11 standard may be sent, for example, via a physical channel with a minimum bandwidth of 20 MHz. Larger channels may be formed through channel bonding. For example, the PPDUs may be sent via physical channels with bandwidths of 40 MHz, 80 MHz, 160 MHz, 520 MHz, or any other frequency greater than 20 MHz, by bonding together multiple 20 MHz channels.

A PPDU may be a composite structure that may comprise a PHY preamble and a payload in the form of a physical layer convergence protocol (PLCP) service data unit (PSDU). For example, the PSDU may comprise a PLCP preamble, a header, and/or one or more MAC protocol data units (MPDUs). Information indicated by the PHY preamble may be used by a receiving device to decode subsequent data in the PSDU. Preamble fields may be duplicated and sent in each of multiple component channels in a bonded channel, for example, if the PPDU is sent via the bonded channel. The PHY preamble may comprise both a legacy portion (e.g., a legacy preamble) and a non-legacy portion (e.g., a non-legacy preamble). The legacy preamble may be used for packet detection, automatic gain control and channel estimation, etc. The legacy preamble also may generally be used to maintain compatibility with legacy devices. The information provided in, and the format and coding of the non-legacy portion of the preamble may be based on the particular IEEE 802.11 protocol to be used to send the payload.

A frequency band may include one or more sub-bands or frequency channels. For example, PPDUs conforming to the IEEE 802.11n, 802.11ac, 802.11 ax and/or 802.1 1be standard amendments may be transmitted over the 2.4 GHz, 5 GHz, and/or 6 GHz bands, each of which may be divided into multiple 20 MHz channels. The PPDUs may be transmitted over a physical channel having a minimum bandwidth of 20 MHz. Larger channels may be formed through channel bonding. For example, PPDUs may be transmitted over physical channels having bandwidths of 40 MHz, 80 MHz, 160 MHz, or 320 MHz by bonding together multiple 20 MHz channels.

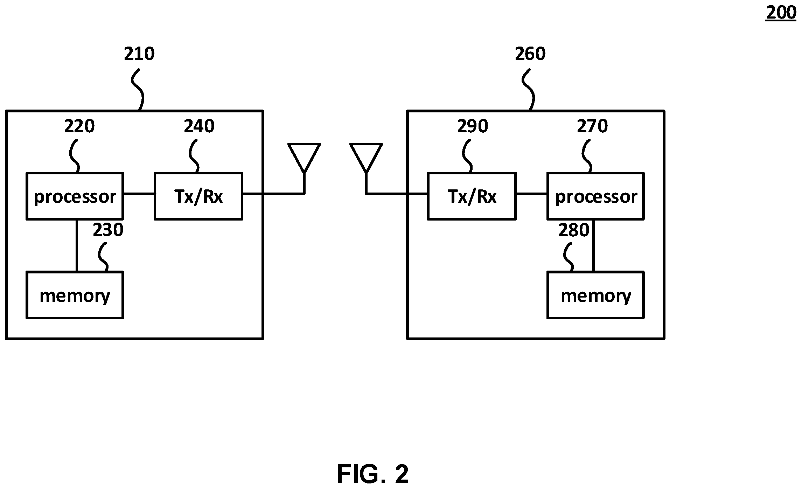

FIG. 2 shows example devices in a communication network. The communication network 200 of FIG. 2 may comprise multiple devices (e.g., communication devices 210 and 260). The communication devices 210 and 260 may perform various functions and procedures as described herein. For example, the communication device 210 may operate as an AP (e.g., an AP station) and the communication device 260 may operate as a station (e.g., a non-AP station). The communication device 210 may operate as a station (e.g., a non-AP station) and the communication device 260 may operate as an AP (e.g., an AP station). Also, or alternatively, the communication device 210 and the communication device 260 may both operate as stations (e.g., a non-AP stations) or may both operate as APs (e.g., AP stations).

The communication device 210 may comprise at least one processor 220, a memory 230, and/or at least one transceiver (e.g., RF unit) 240. The communication device 260 may comprise at least one processor 270, memory 280, and/or at least one transceiver (e.g., RF unit) 290. The transceivers (e.g., transceivers 240, 290) may send/receive radio signals. The transceivers may operate as a PHY layer (e.g., a PHY layer in accordance with an IEEE 802.11 protocol, a 3^{rd} generation partnership project (3GPP) protocol, etc.). The processors (e.g., processors 220, 270) may operate as a PHY layer and/or MAC layer. The processors may be operatively connected to the transceivers, respectively. The communication devices 210 and/or 260 may be a multi-link device (MLD), that is a device capable of operating over multiple links (e.g., as defined by the IEEE 802.11be standard amendment). A MLD has multiple PHY layers. The multiple PHY layers may be implemented using one or more of transceivers 240 and/or 290. Processor 220 and/or 270 may implement functions of the PHY layer, the MAC layer, and/or a logical link control (LLC) layer of the corresponding communication devices 210 and/or 260.

The processors and/or the transceivers may comprise an application specific integrated circuit (ASIC), other chipset, logic circuit, and/or data processor. The memory (e.g., memory 230, 280) may include read-only memory (ROM), random access memory (RAM), flash memory, memory card, storage medium and/or other storage unit. The procedures described herein may be executed by modules that perform various functions described herein (e.g., in accordance with instructions stored in the memory). The modules can be stored in the memory and executed by the processor. The memory may be integrated with the processor or may be external to the processor. The memory may be operatively connected to the processor. The processor may implement the functions, processes and/or methods as described herein. For example, the processor 220 may be implemented to perform operations of the AP as described herein. For example, the processor 270 may be implemented to perform operations of the station as described herein. The memory may store instructions that, when executed by one or more processors, cause the communication device to perform methods as described herein. For example, the memory may be a non-transitory computer-readable medium comprising instructions that, when executed by the one or more processors, cause the one or more processors to perform methods and operations described herein. For example, the memory 230 may store instructions that, when executed by the processor 220, cause the processor 220 to perform operations of the AP as described herein. For example, the memory 280 may store instructions that, when executed by the processor 270, cause the processor 270 to perform operations of the station as described herein.

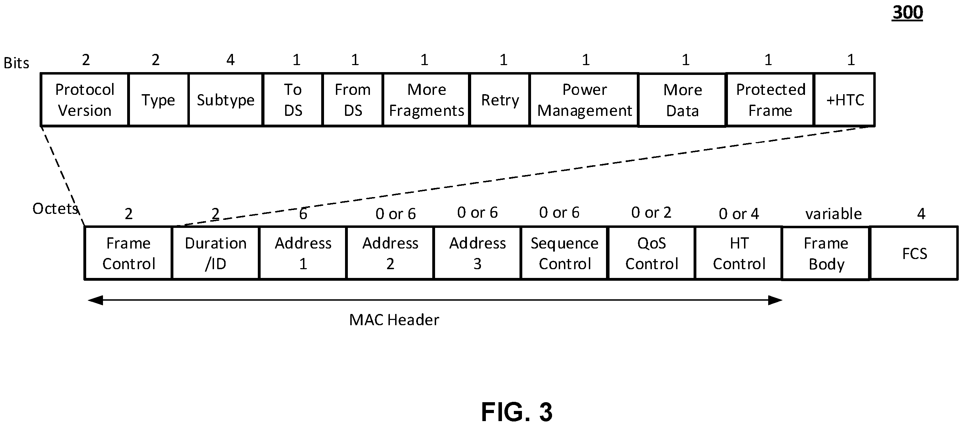

FIG. 3 shows an example format of a MAC frame. In operation, a station may construct, from a MAC frame 300, a subset of MAC frames for transmission and may decode a subset of received MAC frames upon validation. The particular subsets of frames that a station may construct and/or decode may be determined by the functions supported by the station. A station may validate a received MAC frame using a frame check sequence (FCS) contained in the frame and may interpret certain fields from the MAC headers of all frames.

As shown in FIG. 3, a MAC frame 300 may comprise a MAC header, a variable length frame body, and a frame check sequence (FCS). The MAC header may comprise a frame control field, an optional duration/ID field, address fields, an optional sequence control field, an optional QoS control field, and an optional high throughput (HT) control field.

The frame control field may comprise the following subfields: protocol version, type, subtype, To DS, From DS, more fragments, retry, power management, more data, protected frame, and +HTC (high throughput control). The protocol version subfield is invariant in size and placement across all revisions of the IEEE 802.11 standard. The value of the protocol version subfield may be 0 for MAC frames.

The type and subtype subfields together identify the function of the MAC frame 300. There are three frame types: control, data, and management. Each of the frame types has several defined subtypes. Bits within the subtype subfield may be used to indicate a specific modification of the basic data frame (subtype 0). For example, in data frames, the most significant bit (MSB) of the subtype subfield, bit 7 (B7) of the frame control field, is defined as the QoS subfield. For example, if the QoS subfield is set to 1, it may indicate a QoS subtype data frame, which is a data frame that contains a QoS control field in its MAC header. The second MSB of the subtype field, bit 6 (B6) of the frame control field, if set to 1 in data subtypes, may indicate a data frame that contain no frame body field.

The To DS subfield may indicate whether a data frame is destined to the distribution system (DS). The From DS subfield may indicate whether a data frame originates from the DS. The more fragments subfield may be set to 1 in all data or management frames that have another fragment to follow of the MAC service data unit (MSDU) or MAC management protocol data unit (MMPDU) carried by the MAC frame 300. The more fragments subfield may be set to 0 in all other frames in which the more fragments subfield is present.

The retry subfield may be set to 1 in any data or management frame that is a retransmission of an earlier frame. The retry subfield may be set to 0 in all other frames in which the retry subfield is present. A receiving station may use this indication to aid in the process of eliminating duplicate frames. These rules may not apply for frames sent by a station under a block agreement. The power management subfield may be used to indicate the power management mode of a station.

The More Data subfield may indicate to a station in power save (PS) mode that bufferable units (Bus) are buffered for that station at the AP. The more data subfield may be valid in individually addressed data or management frames sent (e.g., transmitted) by an AP to a station in PS mode. The more data subfield may be set to 1 to indicate that at least one additional buffered BU is present for the station.

The protected frame subfield may be set to 1, for example, if the frame body field contains information that has been processed by a cryptographic encapsulation algorithm. The +HTC subfield may indicate that the MAC frame 300 contains an HT control field.

The duration/ID field of the MAC header may indicate various contents depending on frame type and subtype and the QoS capabilities of the sending station. For example, in control frames of the power save poll (PS-Poll) subtype, the duration/ID field may carry an association identifier (AID) of the station that sent (e.g., transmitted) the frame in the 14 least significant bits (LSB), and the two most significant bits (MSB) may be both set to 1. In other frames sent by stations, the duration/ID field may contain a duration value (in microseconds) which may be used by a recipient to update a network allocation vector (NAV). The NAV may be a counter that indicates to a station an amount of time during which the station must defer from accessing the shared medium.

There may be up to four address fields in the MAC frame format. These fields may be used to indicate the basic service set identifier (BSSID), source address (SA), destination address (DA), transmitting address (TA), and receiving address (RA). Certain frames might not contain some of the address fields. Certain address field usage may be specified by the relative position of the address field (1-4) within the MAC header, independent of the type of address present in that field. For example, the address 1 field always identifies the intended receiver(s) of the frame, and the address 2 field, where present, always identifies the transmitter of the frame.

The sequence control field may comprise two subfields, a sequence number subfield and a fragment number subfield. The sequence number subfield in data frames may indicate the sequence number of the MSDU (if not in an Aggregated MSDU (A-MSDU)) or A-MSDU. The sequence number subfield in management frames may indicate the sequence number of the frame. The fragment number subfield may indicate the number of each fragment of an MSDU or MMPDU. The fragment number may be set to 0 in the first or only fragment of an MSDU or MMPDU and may be incremented by one for each successive fragment of that MSDU or MMPDU. The fragment number may be set to 0 in a MAC protocol data unit (MPDU) containing an A-MSDU, or in an MPDU containing an MSDU or MMPDU that is not fragmented. The fragment number may remain constant in all retransmissions of the fragment.

The QoS control field may identify the traffic category (TC) or traffic stream (TS) to which the MAC frame 300 belongs. The QoS control field may also indicate various other QoS related, A-MSDU related, and mesh-related information about the frame. This information can vary by frame type, frame subtype, and type of sending (e.g., transmitting) station. The QoS control field is present in all data frames in which the QoS subfield of the subtype subfield is equal to 1.

The HT control field is present in QoS data, QoS null, and management frames as determined by the +HTC subfield of the frame control field. The frame body field is a variable length field that contains information specific to individual frame types and subtypes. It may comprise one or more MSDUs or MMPDUs. The minimum length of the frame body is 0 octets. The FCS field may contain a 32-bit Cyclic Redundancy Check (CRC) code. The FCS field value may be calculated over all of the fields of the MAC header and the frame body field.

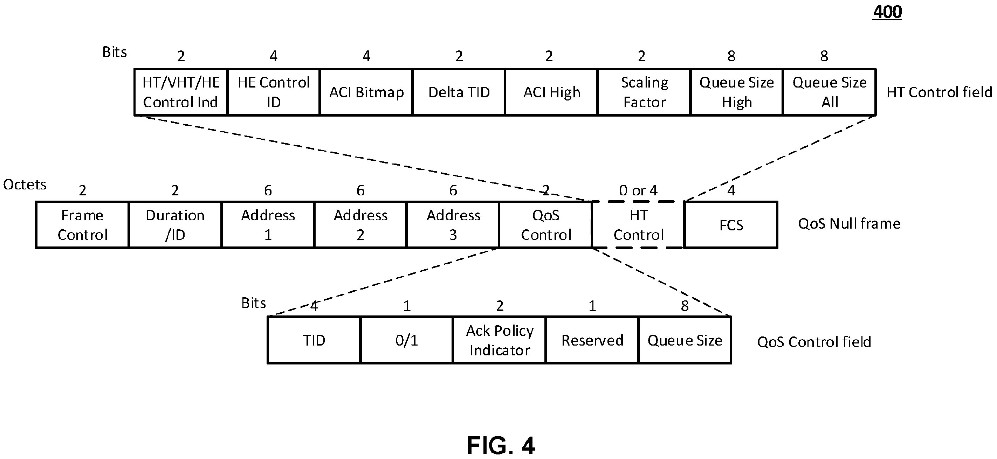

FIG. 4 shows an example of a QoS null frame indicating buffer status information. A QoS null frame 400 refers to a QoS data frame with an empty frame body. A QoS null fame 400 may comprise a QoS control field and an optional HT control field which may contain a buffer status report (BSR) control subfield. A QoS null fame 400 indicating buffer status information may be sent (e.g., transmitted) by a station to an AP.

The QoS control field may comprise a traffic identifier (TID) subfield, an ack policy indicator subfield, and a queue size subfield (or a transmission opportunity (TXOP) duration requested subfield). The TID subfield may identify the TC or TS of traffic for which a TXOP is being requested, through the setting of the TXOP duration requested or queue size subfield. The encoding of the TID subfield depends on the access policy (e.g., allowed value 0 to 7 for enhanced distributed channel access (EDCA) access policy to identify user priority for either TC or TS). The ack policy indicator subfield, together with other information, may identify the acknowledgment policy followed upon delivery of the MPDU (e.g., normal ack, implicit block ack request, no ack, block ack, etc.)

The queue size subfield may be an 8-bit field that indicates the amount of buffered traffic for a given TC or TS at the station for transmission to the AP identified by the receiver address of the frame containing the subfield. The queue size subfield may be present in QoS null frames sent by a station, for example, if bit 4 of the QoS control field is set to 1. The AP may use information contained in the queue size subfield to determine the TXOP (transmission opportunity) duration assigned to the station or to determine the uplink (UL) resources assigned to the station.

In a frame sent by or to a non-High Efficiency (non-HE) station, the following rules may apply to the queue size value:
- The queue size value is the approximate total size, rounded up to the nearest multiple of 256 octets and expressed in units of 256 octets, of all MSDUs and A-MSDUs buffered at the station (excluding the MSDU or A-MSDU contained in the present QoS Data frame) in the delivery queue used for MSDUs and A-MSDUs with TID values equal to the value indicated in the TID subfield of the QoS Control field;
- A queue size value of 0 is used solely to indicate the absence of any buffered traffic in the queue used for the specified TID;
- A queue size value of 254 is used for all sizes greater than 64 768 octets;
- A queue size value of 255 is used to indicate an unspecified or unknown size.

In a frame sent by an HE station to an HE AP, the following rules may apply to the queue size value:
- The queue size value, *QS,* is the approximate total size in octets, of all MSDUs and A-MSDUs buffered at the station (including the MSDUs or A-MSDUs contained in the same PSDU as the frame containing the queue size subfield) in the delivery queue used for MSDUs and A-MSDUs with TID values equal to the value indicated in the TID subfield of the QoS control field;
- The queue size subfield comprises a scaling factor subfield in bits B14-B15 of the QoS control field and an unscaled value, UV, in bits B8-B13 of the QoS control field. The scaling factor subfield provides the scaling factor, *on.*

A station may obtain the queue size, *QS,* from a received QoS control field, which contains a scaling factor, *SF,* and an unscaled value, UV, as follows:
*QS* =
16 × UV, if *SF* is equal to 0;
1024 + 256 × UV, *if SF* is equal to 1;
17408 + 2048 × UV, if *SF* is equal to 2;
148480 + 32768 × UV, if *SF* is equal to 3 and *UV* is less than 62;
> 2147328, if *SF* equal to is 3 and *UV* is equal to 62;
*Unspecified* or *Unknown,* if *SF* is equal to 3 and *UV* is equal to 63.

The TXOP duration requested subfield, which may be included instead of the queue size subfield, may indicate the duration, in units of 32 microseconds (us), that the sending station determines it needs for its next TXOP for the specified TID. The TXOP duration requested subfield may be set to 0 to indicate that no TXOP is requested for the specified TID in the current service period (SP). The TXOP duration requested subfield may be set to a nonzero value to indicate a requested TXOP duration in the range of 32 us to 8160 us in increments of 32 us.

The HT control field may comprise a BSR control subfield which may contain buffer status information used for UL MU operation. The BSR control subfield may be formed by a control ID, an access category index (ACI) bitmap subfield, a delta TID subfield, an ACI high subfield, a scaling factor subfield, a queue size high subfield, and a queue size all subfield of the HT control field.

The ACI bitmap subfield may indicate the access categories for which buffer status is reported (e.g., B0: best effort (AC_BE), B1: background (AC_BK), B2: video (AC_VI), B3: voice (AC_VO), etc.). Each bit of the ACI bitmap subfield may be set to 1 to indicate that the buffer status of the corresponding AC is included in the queue size all subfield, and set to 0 otherwise, except that if the ACI bitmap subfield is 0 and the delta TID subfield is 3, then the buffer status of all 8 TIDs is included.

The delta TID subfield, together with the values of the ACI bitmap subfield, may indicate the number of TIDs for which the station is reporting the buffer status. The ACI high subfield may indicate the ACI of the AC for which the BSR is indicated in the queue size high subfield. The ACI to AC mapping is defined as ACI value 0 mapping to AC_BE, ACI value 1 mapping to AC_BK, ACI value 2 mapping to AC_VI, and ACI value 3 mapping to AC_VO. The scaling factor subfield may indicate the unit SF, in octets, of the queue size high and queue size all subfields.

The queue size high subfield may indicate the amount of buffered traffic, in units of SF octets, for the AC identified by the ACI high subfield, that is intended for the station identified by the receiver address of the frame containing the BSR control subfield. The queue size all subfield may indicate the amount of buffered traffic, in units of SF octets, for all ACs identified by the ACIBitmap subfield, that is intended for the station identified by the receiver address of the frame containing the BSR control subfield.

The queue size values in the queue size high and queue size all subfields are the total sizes, rounded up to the nearest multiple of SF octets, of all MSDUs and A-MSDUs buffered at the station (including the MSDUs or A-MSDUs contained in the same PSDU as the frame containing the BSR control subfield) in delivery queues used for MSDUs and A-MSDUs associated with AC(s) that are specified in the ACI high and ACI bitmap subfields, respectively.

A queue size value of 254 in the queue size high and queue size all subfields may indicate that the amount of buffered traffic is greater than 254 × SF octets. A queue size value of 255 in the queue size high and queue size all subfields may indicate that the amount of buffered traffic is an unspecified or unknown size. The queue size value of QoS data frames containing fragments may remain constant even if the amount of queued traffic changes as successive fragments are sent (e.g., transmitted).

MAC service may provide peer entities with the ability to exchange MSDUs. To support this service, a local MAC may use the underlying PHY-level service to transport the MSDUs to a peer MAC entity. Such asynchronous MSDU transport may be performed on a connectionless basis.

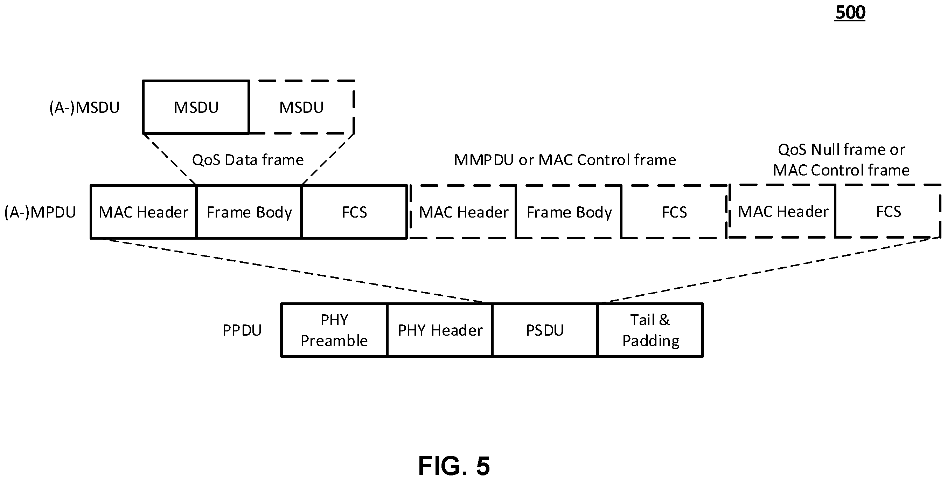

FIG. 5 shows an example format of a PPDU. As shown, the PPDU 500 may comprise a PHY preamble, a PHY header, a PSDU, and tail and padding bits.

The PSDU may comprise one or more MPDUs, such as a QoS data frame, an MMPDU, a MAC control frame, or a QoS null frame. For an MPDU carrying a QoS data frame, the frame body of the MPDU may comprise a MSDU or an A-MSDU. By default, MSDU transport is on a best-effort basis. That is, there is no guarantee that a sent (e.g., transmitted) MSDU will be delivered successfully. The QoS facility may use a traffic identifier (TID) to specify differentiated services on a per-MSDU basis.

A station may differentiate MSDU delivery according to designated traffic category (TC) or traffic stream (TS) of individual MSDUs. The MAC sublayer entities may determine a user priority (UP) for an MSDU based on a TID value provided with the MSDU. The QoS facility may support eight UP values. The UP values may range from 0 to 7 and may form an ordered sequence of priorities, with 1 being the lowest value, 7 the highest value, and 0 falling between 2 and 3.

An MSDU with a particular UP may belong to a traffic category with that UP. The UP may be provided with each MSDU at the medium access control service access point (MAC SAP) directly in a UP parameter. An aggregate MPDU (A-MPDU) may comprise MPDUs with different TID values.

A station may deliver buffer status reports (BSRs) to assist an AP in allocating UL MU resources. The station may either implicitly deliver BSRs in the QoS control field or BSR control subfield of any frame sent (e.g., transmitted) to the AP (unsolicited BSR) or explicitly deliver BSRs in a frame sent to the AP, for example, based on (e.g., in response to) a BSRP Trigger frame (solicited BSR).

The buffer status reported in the QoS control field may comprise a queue size value for a given TID. The buffer status reported in the BSR control field may comprise an ACI bitmap, delta TID, a high priority AC, and two queue sizes. A station may report buffer status to the AP, in the QoS control field, of sent (e.g., transmitted) QoS null frames and QoS data frames and, in the BSR control subfield (if present), of sent (e.g., transmitted) QoS null frames, QoS data frames, and management frames as defined below.

The station may report the queue size for a given TID in the queue size subfield of the QoS control field of sent (e.g., transmitted) QoS data frames or QoS null frames; the station may set the queue size subfield to 255 to indicate an unknown/unspecified queue size for that TID. The station may aggregate multiple QoS data frames or QoS null frames in an A-MPDU to report the queue size for different TIDs.

The station may report buffer status in the BSR control subfield of sent (e.g., transmitted) frames if the AP has indicated its support for receiving the BSR control subfield. A High-Efficiency (HE) station may report the queue size for a preferred AC, indicated by the ACI high subfield, in the queue size high subfield of the BSR control subfield. The station may set the queue size high subfield to 255 to indicate an unknown/unspecified queue size for that AC. A HE station may report the queue size for ACs indicated by the ACI bitmap subfield in the queue size all subfield of the BSR control subfield. The station may set the queue size all subfield to 255 to indicate an unknown/unspecified BSR for those ACs.

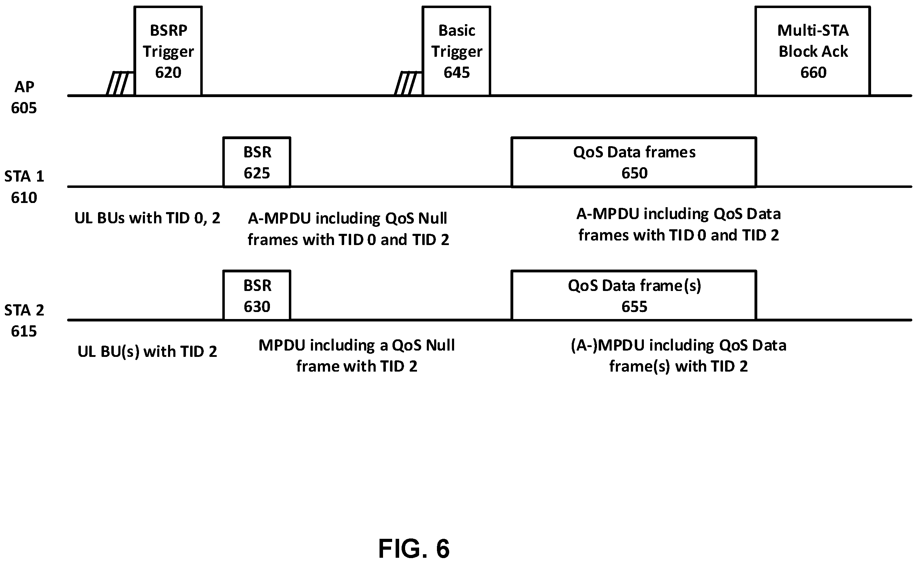

FIG. 6 shows an example that includes buffer status reporting by stations (STAs), scheduling by an access point (AP) of uplink multi-user (MU) transmissions, and transmission of scheduled uplink transmissions by the STAs. The AP 605 may solicit one or more associated STAs (e.g., STA 1 610 and STA 2 615) for buffer status by sending a buffer status report poll (BSRP) trigger frame 620. STA 1610 and/or STA 2 615 may each generate a trigger-based (TB) physical layer protocol data unit (PPDU), for example, in response to receiving the BSRP trigger frame 620 and if the BSRP trigger frame 620 contains, in a User Info field, the 12 LSBs of the STA's AID.

STA 1610 and/or STA 2 615 may each include in a TB PPDU one or more QoS null frames 625 and/or 630. The one or more QoS null frames 625 and/or 630 may contain one or more QoS control fields or one or more BSR control subfields.

A QoS control field may include a queue size subfield as a traffic identifier (TID) for which a STA may have a queue size to report to an AP 605. As shown in FIG. 6, STA 1 610 may respond to the BSRP trigger frame 620 from the AP 605, for example, by sending (e.g., transmitting) an A-MPDU including multiple QoS null frames 625. The QoS null frames may each indicate, in their respective QoS control field, a queue size for a respective TID (e.g., TID 0 and TID 2. Similarly, STA 2 615 may respond to the BSRP trigger frame 620, for example, by sending (e.g., transmitting) an MPDU including a QoS null frame 630, which may indicate a queue size for TID 2 in its QoS control field.

A BSR control subfield may include a queue size all subfield that may indicate the queue size for ACs, that may be indicated by an ACI bitmap subfield, for which a STA may have a queue size to report to a AP 605 if the AP 605 has indicated its support for receiving the BSR control subfield. The STA may set a delta TID, a scaling factor, an ACI high, and the queue size high subfields of the BSR Control subfield.

An AP 605 may send (e.g., transmit) a basic trigger frame 645 to allocate UL MU resources to STA 1 610 and STA 2 615, in response to receiving a BSRs 625 and/or 630 from STA 1 610 and STA 2 615. STA 1610 may send (e.g., transmit) a TB PPDU containing QoS data frames 650 with TID 0 and TID 2 and STA 2 615 may send (e.g., transmit) a TB PPDU containing one or more QoS data frame(s) 655 with TID, in response to receiving the basic trigger frame. The AP 605 may acknowledge the transmitted TB PPDUs from STA 1 610 and STA 2 615 by sending a multi-STA block ack frame 660.

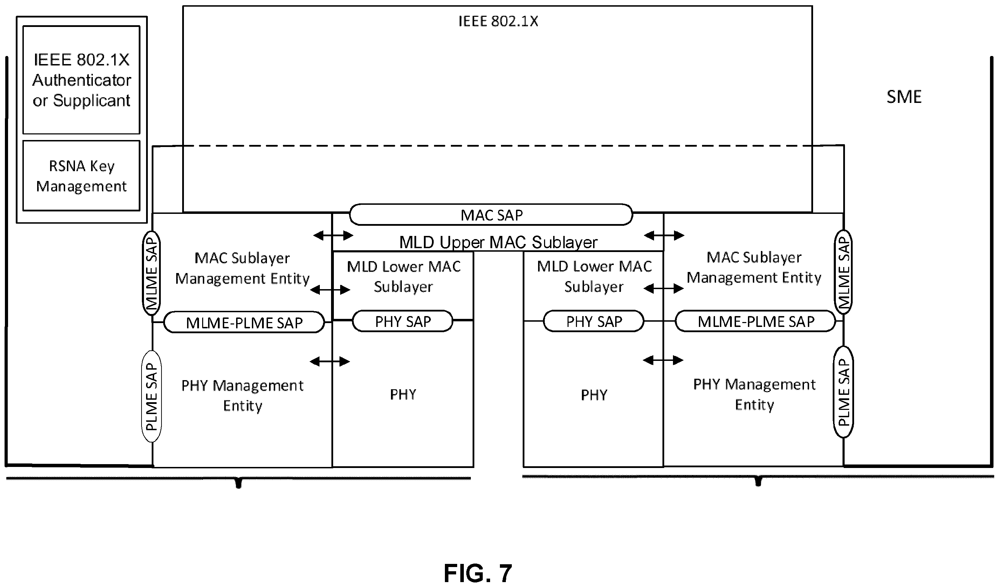

FIG. 7 shows an example reference model for a multi-link device (MLD). An MLD may comprise an entity capable of managing communication over multiple links. The MLD may be a logical entity and may have more than one affiliated STA. An MLD may be an access point MLD (AP MLD) where a STA affiliated with the MLD may be an AP STA (or an AP). An MLD may be a non-access point MLD (non-AP MLD) if a STA affiliated with the MLD is a non-AP STA (or a STA).

Communication across different frequency bands/channels may occur simultaneously, or not, depending on the capabilities of both of the communicating AP MLD and non-AP MLD. As shown in FIG. 7, a MLD may have a single MAC service access point (MAC-SAP) to the LLC layer, which may include a MAC data service. The MLD may support multiple MAC sublayers, that may be coordinated by a sublayer management entity (SME). Each AP STA (or non-AP STA) affiliated with an AP MLD (or non-AP MLD) may have a different MAC address within the MLD.

A SME may be responsible for coordinating the MAC sublayer management entities (MLMEs) of the affiliated STAs of the MLD to maintain a single robust security network association (RSNA) key management entity as well as a single IEEE 802.1X Authenticator or Supplicant for multi-link operation (MLO).

Multi-link operation (MLO) procedures allow a pair of MLDs to discover, synchronize, (de)authenticate, (re)associate, disassociate, and manage resources with each other on any common bands or channels that are supported by both MLDs. The Authenticator and the MAC-SAP of an AP MLD may be identified by the same AP MLD MAC address. The Supplicant and the MAC-SAP of a non-AP MLD may be identified by the same non-AP MLD MAC address.

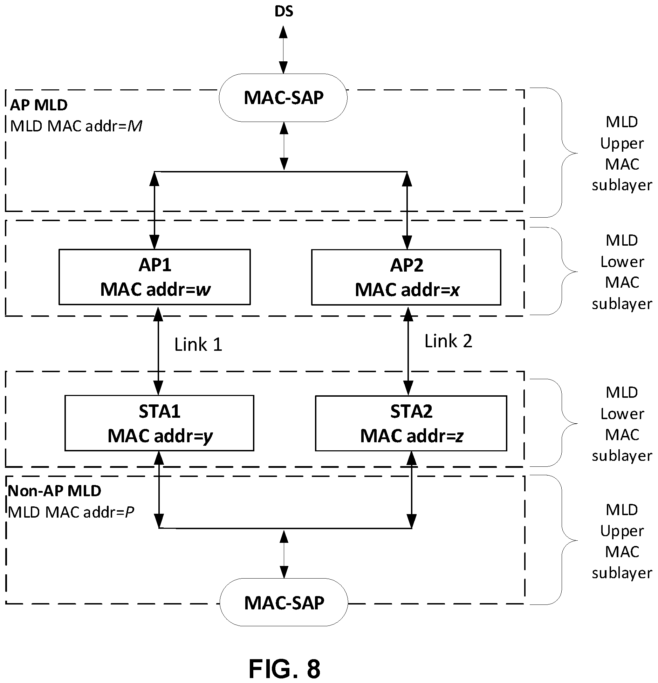

FIG. 8 shows an example of an AP MLD and an associated non-AP MLD. The AP MLD has two affiliated APs (AP1 and AP2), and the non-AP MLD has two affiliated STAs (STA 1 and STA 2). The AP MLD and the non-AP MLD may be communicatively coupled by two links (Link 1 and Link 2.) Link 1 may be established between AP1 and STA1, and link 2 may be established between AP2 and STA2.

Generally, the MAC addresses of an MLD and of its affiliated STAs are different from one another. As shown in FIG. 8, for example, the AP MLD may have MAC address M, AP 1 may have MAC address w, and AP2 may have with MAC address x. Similarly, the non-AP MLD may have MAC address *P*, STA 1 may have MAC address y, and STA2 may have MAC address z.

As shown in FIG. 8, with each MLD, the MAC sublayer may be further divided into an MLD upper MAC sublayer and an MLD lower MAC sublayer. The MLD upper MAC sublayer (MLD) may perform functionalities that may be common across all links. The MLD lower MAC sublayer may perform functionalities that may be local to each link. Some of the functionalities may require joint processing of both the MLD upper and the MLD lower MAC sublayers.

An MLD upper MAC sublayer functions may comprise: Authentication, association, and reassociation (e.g., between an AP MLD and a non-AP MLD); Security association (e.g., pairwise master key security association (PMKSA), pairwise transient key security association (PTKSA)) and distribution of group temporal key (GTK) / integrity GTK (IGTK) / beacon IGTK (BIGTK); Sequence number (SN) / packet number (PN) assignment for frames to be encrypted by pairwise transient key (PTK) for unicast frames; Encryption/decryption using PTK for unicast frames; Selection of the MLD lower MAC sublayer for transmission (TID-to-link mapping); Reordering of packets to ensure in-order delivery per each Block Ack session; Block Ack scoreboarding for individually addressed frames (in collaboration with the MLD lower MAC sublayer); optionally, the MLD upper MAC sublayer delivers the Block Ack record on one link to the MLD lower MAC sublayer of other links; and MLD level management information exchange/indication via the MLD lower MAC sublayer

An MLD lower MAC sublayer functions may comprise: Maintenance of link specific GTK/IGTK/BIGTK (between an AP affiliated with the AP MLD and a STA affiliated with the non-AP MLD); Link-specific encryption/decryption/integrity protection and PN assignment using GTK/IGTK/BIGTK (between an AP affiliated with the AP MLD and a STA affiliated with the non-AP MLD); Link specific management information exchange/indication (e.g., beacon); Link specific control information exchange/indication (e.g., RTS/CTS, acknowledgements, etc.); Power save state and mode; MAC address filtering for frame reception; and Block Ack scoreboarding for individually addressed frames (in collaboration with the MLD upper MAC sublayer); optionally, the MLD lower MAC sublayer receives the Block Ack record on the other links from the MLD upper MAC sublayer.

Multi-link (re)setup between a non-AP MLD and an AP MLD may include an exchange of (re)association request and/or response frames. A (re)association request and/or response frame exchange for a multi-link setup may include both frames carrying a basic multi-link element.

A non-AP MLD may indicate links that may be requested for (re)setup and the capabilities and operational parameters of the requested links in a (re)association request frame. The non-AP MLD may request to (re)set up links with a subset of APs affiliated with the AP MLD. The links that may be requested for (re)setup and the capabilities and operation parameters of requested links are independent of at least some setup links with an associated AP MLD and the capabilities and operation parameters of setup links.

An AP MLD may indicate requested links that may be accepted and requested links that may be rejected for (re)setup and the capabilities and operational parameters of the requested links in a (re)association response frame. The AP MLD may accept a subset of the links that may be requested for (re)setup. The (re)association response frame may be sent to a non-AP STA, affiliated with the non-AP MLD, that may have sent the (re)association request frame.

An MLD that may request or accept multi-link (re)setup for any two links may ensure that each link may be located on a different nonoverlapping channel. A non-AP MLD and a AP MLD may set up links for multi-link operation, and the non-AP MLD may be (re)associated with the AP MLD after, or in response to, a successful multi-link (re)setup between a non-AP MLD and an AP MLD. The corresponding non-AP STA affiliated with the non-AP MLD may be in the same associated state as the non-AP MLD and may be associated with a corresponding AP affiliated with the AP MLD, for each setup link. Functionalities between a non-AP STA and its associated AP may be enabled, for each setup link, unless the functionalities have been extended to the MLD level or specified otherwise.

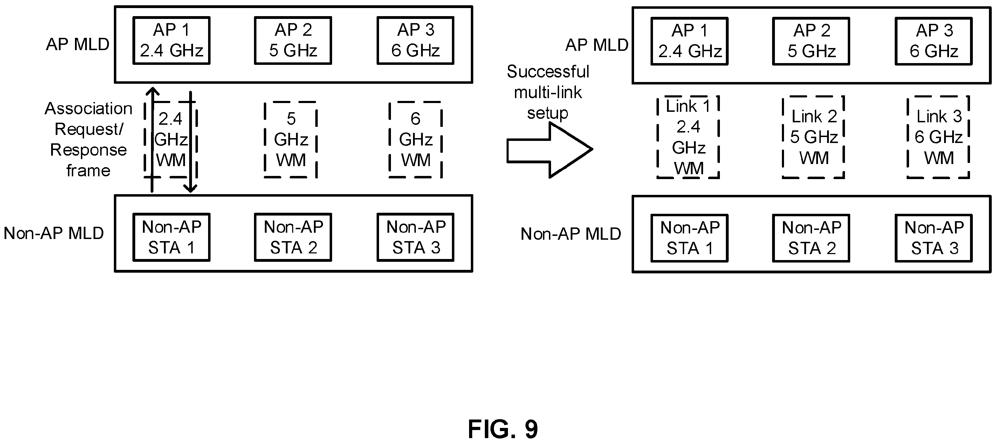

FIG. 9 shows an example of a multi-link setup between an AP MLD and a non-AP MLD. An AP MLD may have three affiliated APs: AP 1 operating in the 2.4 GHz band, AP 2 operating in the 5 GHz band, and AP 3 operating in the 6 GHz band. The non-AP MLD may have three affiliated STAs: non-AP STA 1 operating in the 2.4 GHz band, non-AP STA 2 operating in the 5 GHz band, and non-AP STA 3 operating in the 6 GHz band.

A non-AP MLD may initiate multi-link setup by non-AP STA 1 sending an association request frame to AP 1 that may be affiliated with the AP MLD. The transmitter address (TA) field may be set to the MAC address of non-AP STA 1 and the receiver address (RA) field may be set to the MAC address of AP 1, for example, in the association request frame. The association request frame may include a basic multi-link element that may indicate the MLD MAC address of the non-AP MLD and complete information of non-AP STA 1, non-AP STA 2, and non-AP STA 3. The association request frame may request the setup of three links between the non-AP MLD and the AP MLD (e.g., a link between AP 1 and non-AP STA 1, a link between AP 2 and non-AP STA 2, and a link between AP 3 and non-AP STA 3).

An AP MLD may respond to a requested multi-link setup by an AP sending an association response frame to non-AP STA 1 that may be affiliated with the non-AP MLD. The TA field may be set to the MAC address of the AP 1 and the RA field may be set to the MAC address of the non-AP STA 1, for example, in the association response frame. The association response frame may include a basic multi-link element that may indicate the MLD MAC address of the AP MLD and complete information of AP 1, AP 2, and AP 3. The association response frame may signal successful multi-link setup by the setup of three links between the non-AP MLD and AP MLD (e.g., link 1 between AP 1 and non-AP STA 1, link 2 between AP 2 and non-AP STA 2, and link 3 between AP 3 and non-AP STA 3).

All TIDs at the non-AP MLD may be mapped to all setup links for both uplink and downlink, for example, by default. The TID-to-link mapping mechanism allows an AP MLD and a non-AP MLD that may have performed or may be performing multi-link setup to specify how UL and DL QoS traffic corresponding to different TIDs (e.g., between 0 and 7) may be assigned to the setup links. A TID may be mapped to a link set, which may be a subset of setup links, ranging from a single setup link to all the setup links, for example, in a negotiated TID-to-link mapping.

A setup link may be defined as enabled for a non-AP MLD, if at least one TID is mapped to that link either in DL or in UL, and may be defined as disabled if no TIDs are mapped to that link both in DL and UL. A TID may always be mapped to at least one setup link both in DL and UL, At any point in time, which means that a TID-to-link mapping change can may only be valid and successful if it does not result in a TID having a mapped link set made of zero setup links.

Al setup links may be enabled By default. A link may be used for the exchange of individually addressed frames, subject to the power state of the non-AP STA operating on that link, for example, if the link is enabled for a non-AP MLD. Only MSDUs or A-MSDUs with TIDs mapped to a link may be transmitted on that link in the direction (DLIUL) corresponding to the TID-to-link mapping. Individually addressed management frames and control frames may be sent on any enabled link between an affiliated STA of the non-AP MLD and a corresponding AP of the AP MLD, both in DL and UL.

A link may not be used for the exchange of individually addressed frames between an affiliated STA of a non-AP MLD and a corresponding AP of a AP MLD if a link is disabled for a non-AP MLD. A non-AP MLD may use any link within a set of enabled links to send (e.g., transmit) individually addressed MSDUs or A-MSDUs corresponding to that TID if a TID is mapped in UL to a set of enabled links for a non-AP MLD.

A non-AP MLD may retrieve individually addressed BUs buffered at a AP MLD that may be MSDUs or A-MSDUs corresponding to a TID, on any link of the set of enabled links if a TID is mapped in DL to a set of enabled links for a non-AP MLD. Conversely, an AP MLD may use any link within the set of enabled links to send (e.g., transmit) individually addressed MSDUs or A-MSDUs corresponding to the TID, subject to the power state of the non-AP STA on each of the used link.

A non-AP MLD may retrieve BUs buffered by an AP MLD on any setup link, though the AP MLD may recommend a link if the default mode is used. A non-AP MLD may retrieve buffered BUs that may be MMPDUs buffered at the AP MLD on any enabled link. An AP MLD may use any enabled link to send (e.g., transmit) individually addressed bufferable management frames that may not be measurement MMPDUs, subject to the power state of the non-AP STA on the used link.

A STA's associated AP affiliated with an AP MLD may send (e.g., transmit) to the STA: MSDUs/A-MSDUs for a set of mapped TIDs for a non-AP MLD; and MMPDUs that may not be measurement MMPDUs for the non-AP MLD or its affiliated STAs, unless the frames are transmitted to another STA affiliated with the same non-AP MLD and in active mode, for example, if a STA affiliated with a non-AP MLD is in active mode on a link with a set of TIDs mapped for DL transmission, .

Under a default mapping mode, all TIDs may be mapped to all setup links for DL and UL, and all setup links may be enabled. A non-AP MLD and an AP MLD that may perform multi-link setup may operate under this mode if a TID-to-link mapping negotiation for a different mapping has not occurred, was unsuccessful, or was torn down.

A non-AP MLD may initiate a TID-to-link mapping negotiation by including a TID-to-link mapping element in a (re)association request frame, in a multi-link (re)setup procedure, if an AP MLD has indicated support for TID-to-link mapping negotiation. After receiving the (re)association request frame containing the TID-to-link mapping element, the AP MLD may reply to the (re)association request frame in according to the following rules. The AP MLD may accept the requested TID-to-link mapping indicated in the TID-to-link mapping element in the received (re)association request frame only if it accepts the multi-link (re)setup for all links on which at least one TID may be requested to be mapped. The non-AP MLD may include, in the (re)association response frame, a TID-to-link mapping element In this case. Otherwise, the non-AP MLD may indicate rejection of the proposed TID-to-link mapping by including in the (re)association response frame a TID-to-link mapping element that suggests a preferred TID-to-link mapping.

An initiating MLD may send an individually addressed TID-to-link mapping request frame to a responding MLD, that may have indicated support of TID-to-link mapping negotiation, to negotiate a new TID-to-link mapping, for example, after or in response to a successful multi-link (re)setup. The responding MLD may send an individually addressed TID-to-link mapping response frame to the initiating MLD according to the following rules, for example, in response to receiving the individually addressed TID-to-link mapping request frame. The responding MLD may accept the requested TID-to-link mapping indicated in the TID-to-link mapping element in the received TID-to-link mapping request frame by sending (e.g., transmitting) a TID-to-link mapping response frame. Otherwise, the responding MLD may indicate rejection of the proposed TID-to-link mapping in the TID-to-link mapping response frame. The responding MLD may suggest a preferred TID-to-link mapping in the TID-to-link mapping response frame by including the TID-to-link mapping element in the TID-to-link mapping response frame.

An MLD may suggest a preferred TID-to-link mapping to a peer MLD by sending an unsolicited TID-to-link mapping response frame that may include a TID-to-link mapping element. An MLD may consider the preferred TID-to-link mapping when it initiates a new TID-to-link mapping. In addition, an AP MLD may take into account the traffic flow(s) affiliated with the non-AP MLD and the capabilities and constraints, if any, of the non-AP MLD, for example, if a peer MLD indicates a preferred TID-to-link mapping.

Either MLD may tear down a negotiated TID-to-link mapping by sending an individually addressed TID-to-link mapping teardown frame, for example, if two MLDs have negotiated a TID-to-link mapping. The MLDs may operate in default mapping mode, for example, after or in response to teardown. both the MLD and the peer MLD update an uplink and/or downlink TID-to-link mapping information according to the negotiated the TID-to-link mapping, for example, if an MLD successfully negotiates a TID-to-link mapping with a peer MLD.

A TID *n* shall not be mapped to the link associated with the link ID i in uplink and/or downlink, for example, if an MLD has successfully negotiated with a peer MLD an uplink and/or downlink TID-to-link mapping in which the bit position i of a link mapping field *n* in the TID-to-link mapping element is set to 0. The TID *n* may be mapped to the link associated with the link ID i in uplink and/or downlink if an MLD has successfully negotiated with a peer MLD an uplink and/or downlink TID-to-link mapping in which the bit position i of a link mapping field n in the TID-to-link mapping element is set to 1.

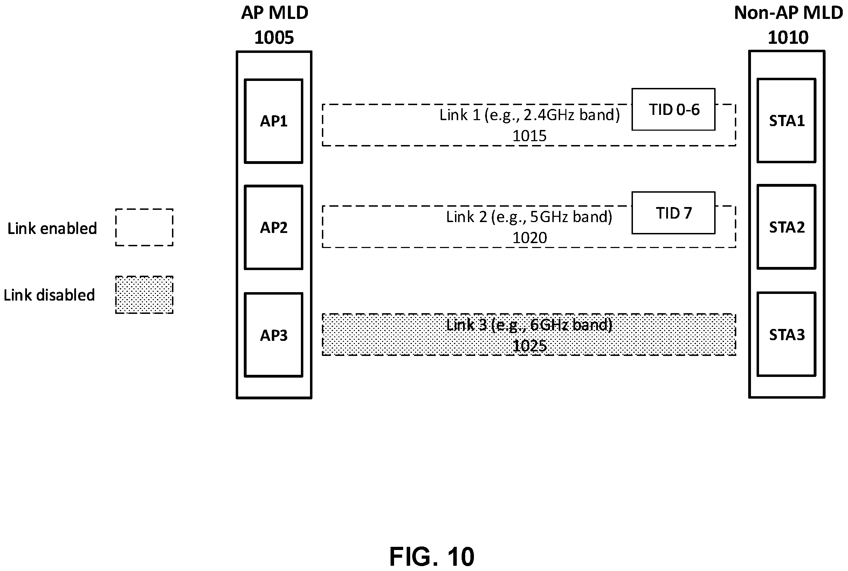

FIG. 10 shows an example of a TID-to-link mapping in a multi-link communication environment. The multi-link communication environment may include an AP MLD having three affiliated APs and a non-AP MLD having three affiliated STAs. A non-AP MLD 1010 and a AP MLD 1005 may negotiate a TID-to-link mapping, for example, if in, or after, multi-link setup. The TID-to-link mapping may map TIDs at the non-AP MLD 1010 in UL and DL to setup links between the AP MLD 1005 and the non-AP MLD 1010. The TID-to-link mapping may map TIDs 0-6 in both UL and DL to link 1 1015 and TID 7 in both UL and DL to link 2 1020 (e.g., as described herein in FIG. 10). Links 1 and 2 may be enabled, and link 3 1025 may be disabled. The TID-to-link mapping negotiation may be performed by exchanging an association request and/or response frame or a TID-to-link mapping request and/or response frame between the non-AP MLD 1010 and the AP MLD 1005.

A non-simultaneous transmit and receive (NSTR) link pair for an MLD may comprise a pair of links, corresponding to respective STAs affiliated with the MLD, for which receiver requirements are not met on one of the links when a STA affiliated with the MLD is sending (e.g., transmitting) on the other link. Each link of such a pair may be a member of the NSTR link pair. Link 1 1015 and link 2 1020 may be an NSTR link pair for the MLD, for example, if an MLD supports transmission on link 1 1015 concurrently with reception on link 2 1020 but cannot support transmission on link 2 1020 concurrently with reception on link 1 1015.

A simultaneous transmit and receive (STR) link pair may be a pair of links that may not be an NSTR link pair. A STA that may be affiliated with the MLD and that may be operating on a first link in the STR link pair may access the wireless medium on a first link by following rules for EDCA regardless of any activity occurring on a second link of the STR link pair, if a pair of links on which an MLD operates is an STR link pair, unless explicitly stated otherwise.

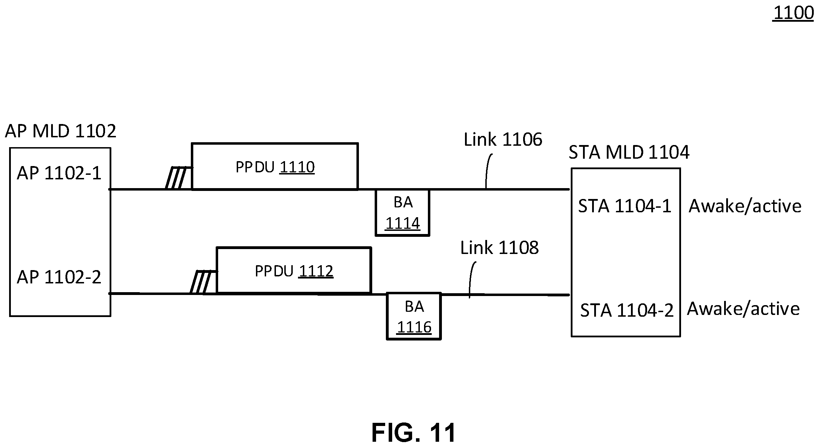

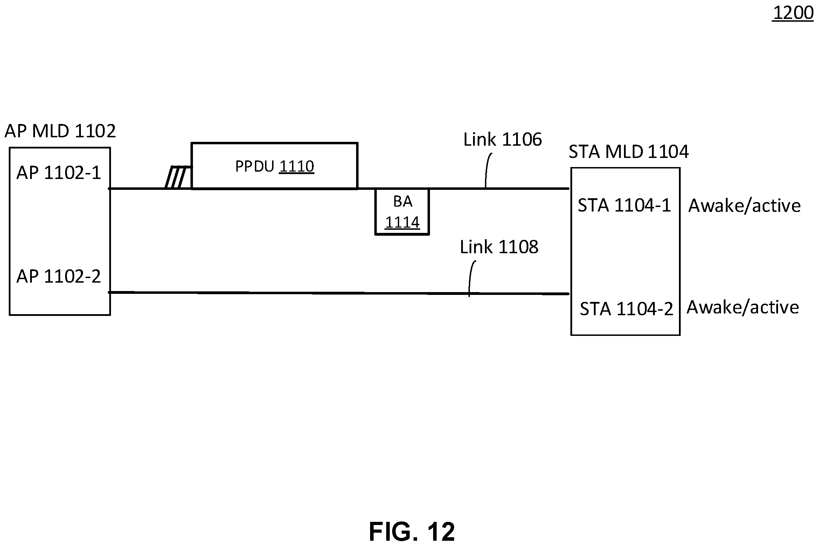

FIGS. 11 and 12 show examples of some non-simultaneous transmit and receive (NSTR) operations. Example 1100 includes an AP MLD 1102 and a STA MLD 1104. AP MLD 1102 may include two affiliated APs 1102-1 and 1102-2. STA MLD 1104 may include two affiliated STAs 1104-1 and 1104-2. AP MLD 1102 and STA MLD 1104 may be communicatively coupled by two links 1106 and 1108. Link 1106 may be established between AP 1102-1 and STA 1104-1, and link 1108 may be established between AP 1102-2 and STA 1104-2. Links 1106 and 1108 may be an NSTR link pair for STA MLD 1104. STA MLD 1104 may not receive on link 1106 while sending (e.g., transmitting) on link 1108, and vice versa if so.

AP MLD 1102 may transmit, via AP 1102-1 and link 1106, a PPDU 1110 to STA MLD 1104. AP MLD 1102 may also transmit, via AP 1102-2 and link 1108, a PPDU 1112 to STA MLD 1104 even if sending (e.g., transmitting) PPDU 1110. STA MLD 1104 may receive PPDU 1110 via STA 1104-2 and link 1108. STA MLD 1104 may acknowledge PPDU 1110 by sending (e.g., transmitting), via STA 1104-1 and link 1106, a block acknowledgement (BA) frame 1114 to AP MLD 1102. STA MLD 1104 may also transmit, via STA 1104-2 and link 1108, a BA frame 1116 to AP MLD 1102 to acknowledge PPDU 1112 even if sending (e.g., transmitting) BA frame 1114.

In example 1100, it should be noted, that STA MLD 1104 may send (e.g., transmit) or receive concurrently on links 1106 and 1108 but may not receive (e.g., cannot receive) on link 1106 while sending (e.g., transmitting) on link 1108, and vice versa. Due to this limitation, in order to use both links 1106 and 1108 simultaneously, AP MLD 1102 may perform PPDU alignment to help ensure, for example, that PPDU 1112 ends before STA MLD 1104 must start sending (e.g., transmitting) BA frame 1114. Performing PPDU alignment may increase the operation complexity of AP MLD 1102, and, in practice, AP MLD 1102 may choose not to send (e.g., transmit) on both links simultaneously. AP MLD 1102 may choose not to send (e.g., transmit) to STA MLD 1104 via link 1108 (e.g., as described herein in example 1200 of FIG. 12) if sending (e.g., transmitting) PPDU 1110 via link 1106.

According to at least some technologies, such as one or more IEEE 802.11 standards, an MLD receiver may not have knowledge of whether a multi-link transmitter will send (e.g., transmit) to the MLD receiver via multiple links concurrently. The MLD receiver must therefore stay in an awake/active state on a first link while receiving on a second link, even if the transmitter does not send (e.g., transmit) to the MLD receiver on the first link during that time. STA MLD 1104 must maintain STA 1104-2 in an awake/active state while receiving PPDU 1110 on link 1106, even though AP MLD 1102 may send (e.g., transmit) nothing to STA MLD 1104 via link 1108 during that time (e.g., as described herein in example 1200). STA MLD 1104 may also not send (e.g., transmit) over link 1108 if receiving over link 1106, however, if links 1106 and 1108 are an NSTR link pair. Thus, STA 1104-2 may remain in an awake/active state if link 1108 is unused by STA MLD 1104. This results in unnecessary power consumption at STA MLD 1104.

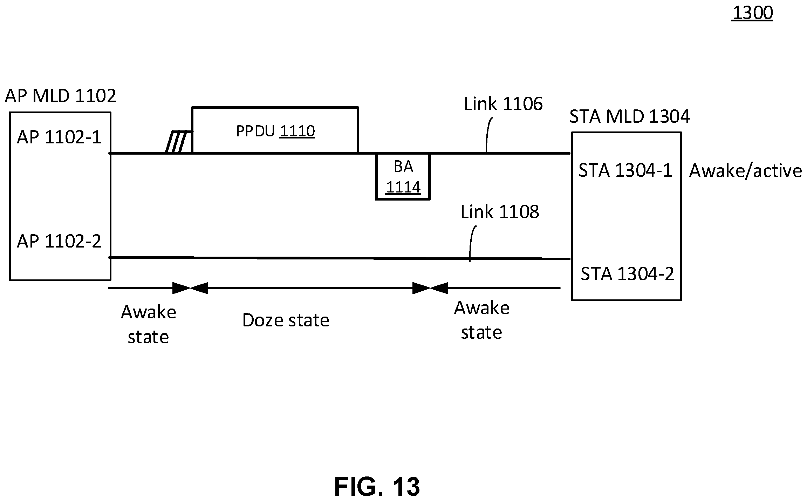

FIG. 13 shows an example of an NSTR power save (PS) operation. An NSTR power save (PS) mode operation, as shown in FIG. 13, proposes allowing a STA or AP MLD to transition, the STA or AP corresponding to a first link of an NSTR link pair, from an awake state to a doze state if a second link of the NSTR link pair is in use. STA MLD 1304 may transition a STA 1304-2 corresponding to link 1108 from the awake state to the doze state, for example, if links 1106 and 1108 are an NSTR link pair for a STA MLD 1304 that implements the NSTR PS mode. STA MLD 1304 may transition a STA 1304-2 corresponding to link 1108 from the awake state to the doze state, for example, if STA MLD 1304 uses a STA 1304-1 corresponding to link 1106 to communicate with AP MLD 1102. STA MLD 1304 may transition STA 1304-2 back to the awake state if communication ends over link 1106.

A STA or AP MLD that supports the NSTR PS mode may inform an MLD it may be communicating with of its support and/or use of the NSTR PS mode. The MLD, also supporting the NSTR PS mode, may use this information to determine if it may communicate with the STA or AP MLD via a given link of the NSTR link pair. The MLD may avoid sending (e.g., transmitting) to the STA or AP MLD on a first link of an NSTR link pair if the MLD is using a second link of the NSTR link pair to communicate (e.g., sending and/or receiving) with the STA or AP MLD, for example, when the STA or AP MLD has the NSTR PS mode enabled.

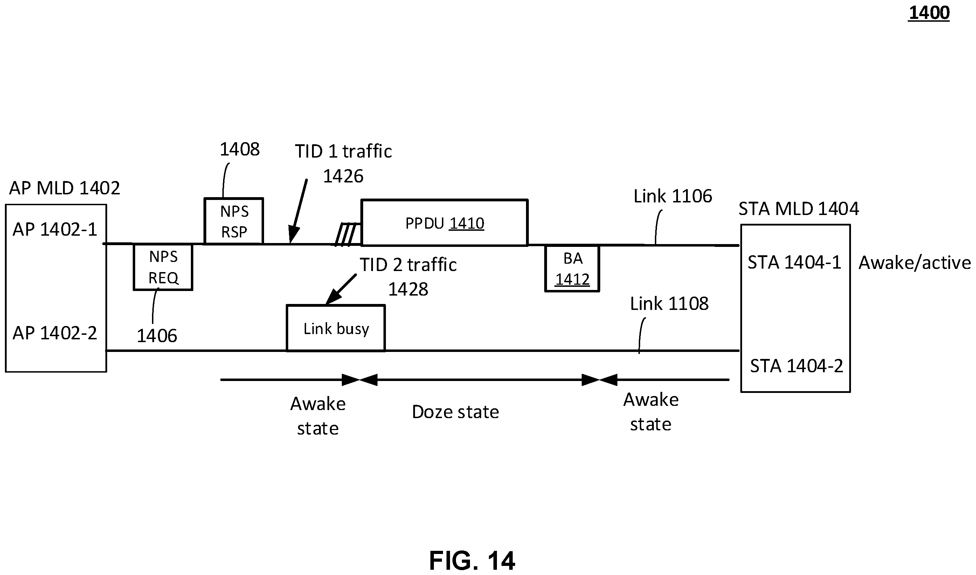

FIG. 14 shows an example of an NSTR PS operation. Links 1106 and 1108 may be an NSTR link pair for a STA MLD 1404 that may support the NSTR PS mode. STA MLD 1404 may transmit, via link 1106 or link 1108, an NSTR PS (NPS) request frame 1406 to an AP MLD 1402 that may support the NSTR PS mode. NPS request frame 1406 may request activation/enabling or deactivation/disabling of the NSTR PS mode. AP MLD 1402 may respond to NPS request frame 1406 by sending (e.g., transmitting) an NPS response frame 1408 that may accept or reject the request contained in NPS request frame 1406.

STA MLD 1404 may request in NPS request frame 1406 activation/enabling of a NSTR PS mode. AP MLD 1402 may accept in NPS response frame 1408 the request contained in NPS request frame 1406. Subsequently, traffic may arrive at AP MLD 1402 for a first TID (e.g., TID 1 1426) mapped to link 1106 and for a second TID (e.g., TID 2 1428) mapped to link 1108. AP MLD 1402, via AP 1402-1, may gain access to link 1106 before AP MLD 1402, via AP 1402-2, may gain access to link 1108, for example, if link 1108 is busy because the traffic for the second TID is arriving at AP MLD 1402). AP MLD 1402 may begin sending (e.g., transmitting) to STA MLD 1404, via link 1106, a PPDU 1410 comprising the traffic for the first TID.

STA MLD 1404 may transition STA 1404-2, corresponding to link 1108, from the awake state to the doze state in response to detecting PPDU 1410 on link 1106 if the NSTR PS mode is activated and/or enabled. STA MLD 1404 may maintain STA 1404-2 in the doze state until communication on link 1106 ends with STA MLD 1404 sending (e.g., transmitting) a BA frame 1412, in response to PPDU 1410, to AP MLD 1402.

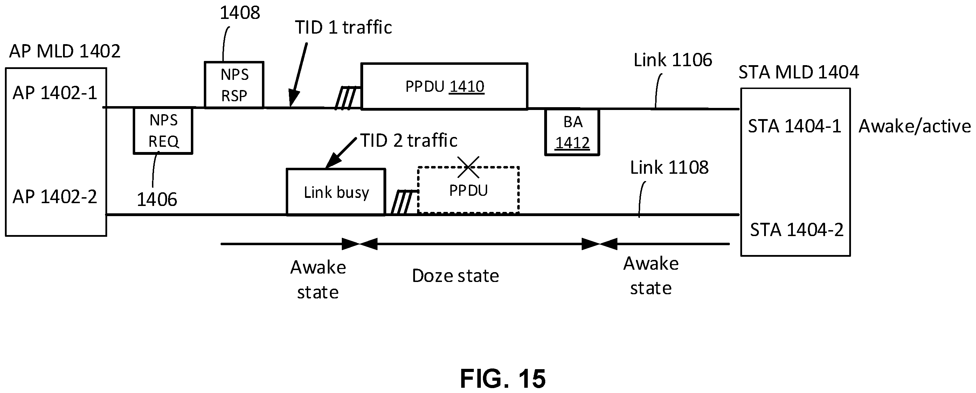

FIG. 15 shows a problem that may arise in an NSTR PS operation, such as in the operation described with respect to FIG. 14. Determining that STA MLD 1404 may be configured to transition STA 1404-2 to the doze state if link 1106 is in use, AP MLD 1402 may refrain from sending (e.g., transmitting) any PPDU via link 1108 to STA MLD 1404 if link 1106 is being used for communication between AP MLD 1402 and STA MLD 1404. AP MLD 1402 refraining from sending (e.g., transmitting) a PPDU may be despite the AP MLD 1402 having traffic for the second TID available for transmission on link 1108 and link 1108 becoming idle while link 1106 is still in use. This can result in the traffic for the second TID being delayed unnecessarily and in a sub-optimal utilization of the second link.

An AP MLD that supports an NSTR PS mode may transmit, via a first link of an NSTR link pair for the STA MLD, to a STA MLD that may support the NSTR PS mode, a first frame. The first frame may comprise a first field that may indicate whether a STA affiliated with the STA MLD, and corresponding to a second link of the NSTR link pair, may be in a first power state. The first power state may be a doze state or an awake state. The STA MLD may transition the STA from a second power state to the first power state based on the first field. The second power state may be an awake state or a doze state. By transitioning the STA based on the first field, the STA MLD may be available to communicate via the second link if the AP MLD determines to use the second link and the first link concurrently to communicate with the STA MLD.

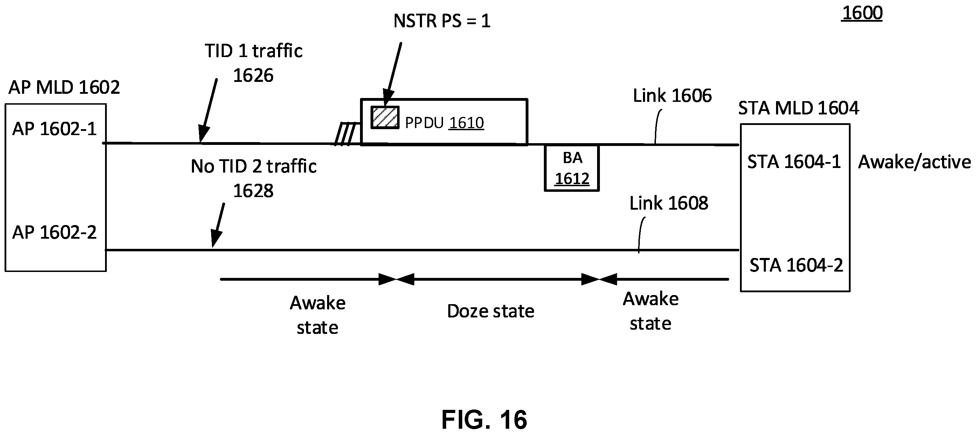

FIGS. 16-21 show examples of an NSTR PS mode. Examples 1600-2100 are provided as examples only and are not limiting.

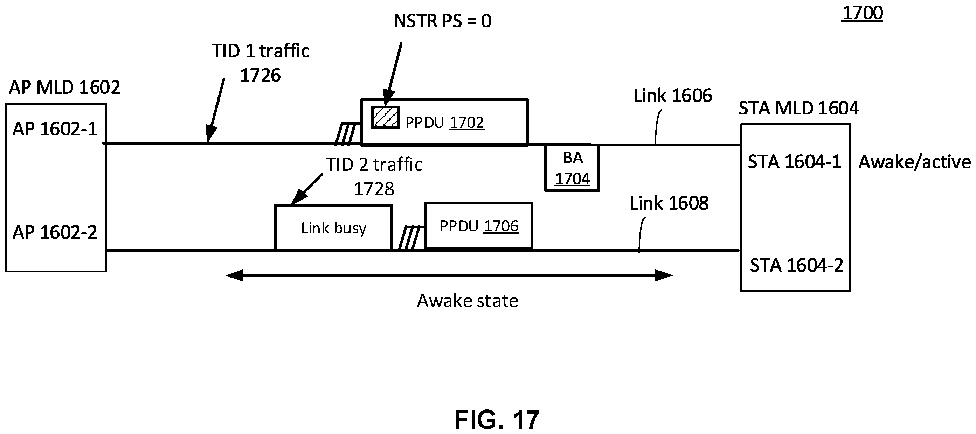

FIGS. 16 and 17 show examples 1600 and 1700 that include an AP MLD 1602 and a STA MLD 1604. AP MLD 1602 may include two affiliated APs 1602-1 and 1602-2. STA MLD 1604 may include two affiliated STAs 1604-1 and 1604-2. AP MLD 1602 and STA MLD 1604 may be communicatively coupled by two links 1606 and 1608. Links 1606 and 1608 may correspond to different frequency bands from among a plurality of frequency bands (e.g., 2.4 GHz, 5 GHz, 6 GHz, 60 GHz, etc.). Links 1606 and 1608 may correspond to different sub-bands (e.g., 6 GHz - 1 and 6 GHz - 2) within the same frequency band (e.g., 6GHz). Link 1606 may be established between AP 1602-1 and STA 1604-1, and link 1608 may be established between AP 1602-2 and STA 1604-2. AP MLD 1602 and STA MLD 1604 may use both links 1606 and 1608 for communication. In examples 1600 and 1700, traffic associated with a first TID (e.g., TID 1) may be mapped to link 1606, and traffic associated with a second TID (e.g., TID 2) may be mapped to link 1608. Furthermore, examples 1600 and 1700 links 1606 and 1608 may be an NSTR link pair for STA MLD 1604. STA MLD 1604 may not receive on link 1606 while sending (e.g., transmitting) on link 1608, and vice versa if links 1606 and 1608 are an NSTR link pair.

In examples 1600 and 1700, AP MLD 1602 and STA MLD 1604 may support an NSTR PS mode described herein. AP MLD 1602 and STA MLD 1604 may exchange frames that indicate support of the NSTR PS mode. STA MLD 1604 may send (e.g., transmit) to AP MLD 1602, via link 1606 or 1608, an association and/or probe request frame for example. The association and/or probe request frame may indicate support of STA MLD 1604 of the NSTR PS mode. AP MLD 1602 may respond to the association and/or probe request frame by sending (e.g., transmitting) an association and/or probe response frame to STA MLD 1604. The association and/or probe request frame may indicate support of AP MLD 1602 of the NSTR PS mode. Alternatively, AP MLD 1602 may indicate its support of the NSTR PS mode in a broadcast frame (e.g., beacon frame). Alternatively, AP MLD 1602 and STA MLD 1604 may support exchanging NPS request and/or response frames as described herein in FIG. 14. In examples 1600-1700, the NSTR PS mode may be activated and/or enabled by both AP MLD 1602 and STA MLD 1604. AP MLD 1602 and/or STA MLD 1604 may thus be able to operate their affiliated APs/STAs in at least a first power state and a second power state. The first power state may be a doze state and the second power state may be an awake state, or alternatively, the first power state may be an awake state and the second power state may be a doze state. In examples 1600 and 1700, the first power state may be the doze state and that the second power state may be the awake state. Examples 1600 and 1700 begin with all affiliated STAs of STA MLD 1604 in the second power state (e.g., the awake state).

In example 1600, of FIG. 16, traffic may arrive at AP MLD 1602 for the first TID (e.g., TID 1 1626) which may be mapped to link 1606 without traffic arriving or being available for transmission for the second TID (e.g., TID 2 1628) which may be mapped to link 1608. AP MLD 1602 may send (e.g., transmit) to STA MLD 1604, via link 1606 and by AP 1602-1 to STA 1604-1, a PPDU 1610 comprising the traffic for the first TID, for example, after or in response to gaining access to link 1606 via AP 1602-1 .

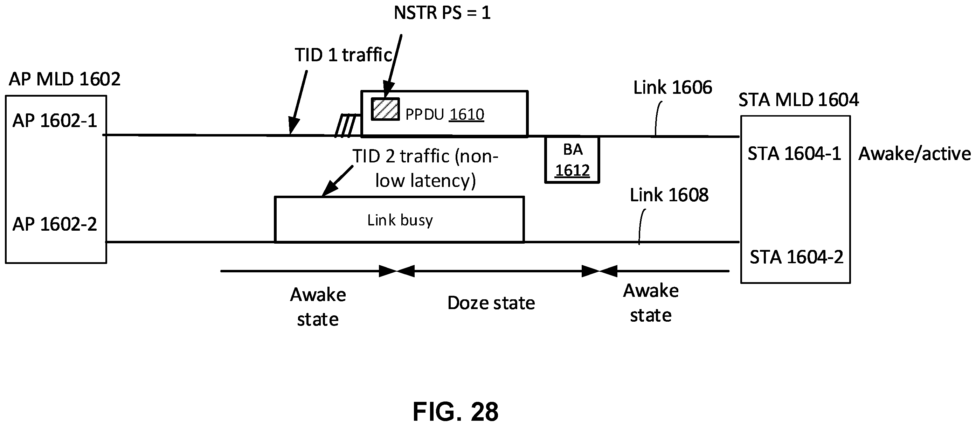

PPDU 1610 may comprise a first field that may indicate whether STA 1604-2, corresponding to link 1608, may be allowed to be or may be in the first power state. The first field may comprise an indication of whether STA 1604-2 may be in the first power state. The indication may indicate that STA 1604-2 may not be in the first power state if AP MLD 1602 has buffered traffic for transmission to STA MLD 1604 via link 1608. The indication may indicate that STA 1604-2 may be in the first power state despite AP MLD 1602 having buffered traffic for transmission to STA MLD 1604 via link 1608. FIG. 28 shows an example of an AP MDL 1602 having only non-low latency traffic or only higher priority traffic to send (e.g., transmit) to a STA MLD 1604 via a link. AP MLD 1602 may have traffic for transmission to STA MLD 1604 via link 1608 but link 1608 may be anticipated to be busy for a period of time (e.g., the time that PPDU 1610 and BA frame 1612 are exchanged) longer than the time required for the transmission of the traffic to STA MLD 1604, for example, as described herein in FIG. 28. AP MLD 1602 may thus determine that maintaining STA 1604-2 in the second power state may not be necessary if AP MLD 1602 does not intend to send (e.g., transmit) to STA MLD 1604 via link 1608 while communicating with STA MLD 1604 via link 1606. AP MLD 1602 may determine that STA 1604-2 may be in the first power state (e.g., doze state) if the first field indicates that STA 1604-2 is allowed to be or is in the first power state. AP 1602-2 may not try to send (e.g., transmit) any frame to STA 1604-2 for a time period for which STA 1604-2 may be in the first power state.

A first field may comprise an indication of whether AP MLD 1602 may have buffered traffic for transmission to STA MLD 1604 via link 1608. STA MLD 1604 may interpret the indication as allowing STA 1604-2 to be in a first power state if the indication indicates that AP MLD 1602 does not have buffered traffic for transmission to STA MLD 1604 via link 1608 and as disallowing STA 1604-2 to be in the first power state if the indication indicates that AP MLD 1602 has buffered traffic for transmission to STA MLD 1604 via link 1608.

PPDU 1610 may comprise a second field indicating a duration that STA 1604-2 may be allowed to be in, or may be in, the first power state, if STA 1604-2 is allowed to be in, or is in, the first power state. The second field may comprise a duration field that may indicate a first duration to be used for communication, by AP MLD 1602 and via link 1606, with STA MLD 1604 after PPDU 1610. The second field may indicate an amount of time that link 1606 may be used for communication between AP MLD 1602 and STA MLD 1604 after, or in response to, reception of PPDU 1610 by STA MLD 1604. The duration field may be a TXOP duration field of PPDU 1610, and the first duration may comprise a TXOP duration. The duration field may be comprised in a subfield (e.g., TXOP field) of a signal field (e.g., signal (SIG), universal (U)-SIG, UHR-SIG, EHT-SIG) of a preamble part of PPDU 1610. The duration field may be comprised in a subfield (e.g., Duration field) of a MAC header of PPDU 1610.

In example 1600, AP MLD 1602 may set a first field of PPDU 1610 to 1 to indicate that STA 1604-2 may be allowed to be, or may be, in the first power state, or to indicate that AP MLD 1602 has no buffered traffic for transmission to STA MLD 1604 via link 1608 if there is no traffic for a second TID mapped to link 1608. STA MLD 1604 may determine that STA 1604-2 is allowed to be in the first power state and may transition STA 1604-2 from the second power state to the first power state based on detecting PPDU 1610 and processing the first field. STA 1604 may also determine a duration, from the second field of PPDU 1610, that STA 1604-2 may be in the first power state. In example 1600, the duration may correspond to the remaining transmission time of PPDU 1610, the transmission time of a BA frame 1612 from STA MLD 1604 to AP MLD 1602, and the duration of a short interframe space (SIFS) between PPDU 1610 and BA frame 1612. STA MLD 1604 may maintain STA 1604-2 in the first power state until communication on link 1606 ends with STA MLD 1604 sending (e.g., transmitting) BA frame 1612, for example, in response to PPDU 1610, to AP MLD 1602.

In example 1700, traffic may arrive or may be available for transmission at AP MLD 1602 for both the first TID (e.g., TID 1 1726) that may be mapped to link 1606 and the second TID (e.g., TID 2 1728) that may be mapped to link 1608. However, due to link 1608 being busy, AP MLD 1602, via AP 1602-1, may gain access to link 1606 before AP MLD 1602, via AP 1602-2, may gain access to link 1608. AP MLD 1602 may thus begin sending (e.g., transmitting) to STA MLD 1604, via link 1606, a PPDU 1702 comprising the traffic for the first TID.

PPDU 1702 may be similar to PPDU 1610 described above. Specifically, PPDU 1702 may comprise a first field that may indicate whether STA 1604-2, corresponding to link 1608, may be in a first power state. Additionally, PPDU 1702 may further comprise a second field that may indicate a duration that STA 1604-2 may be in the first power state, if STA 1604-2 is allowed to be in the first power state.

In example 1700, AP MLD 1602 may set a first field of PPDU 1702 to 0 to indicate that STA 1604-2 may not be in a first power state (or to indicate that AP MLD 1602 has buffered traffic for transmission to STA MLD 1604 via link 1608) if traffic is available for transmission for the second TID mapped to link 1608 (and knowing that link 1608 will become idle while PPDU 1702 is being transmitted). STA MLD 1604 may determine that STA 1604-2 may not be in the first power state and therefore maintains STA 1604-2 in the second power state, for example, after or in response to detecting PPDU 1702 and processing the first field. This allows AP MLD 1602, to access link 1608 and to send (e.g., transmit) to STA MLD 1604, via link 1608, a PPDU 1706 comprising the traffic for the second TID if link 1608 becomes idle. As shown in FIG. 17, AP MLD 1602 may construct PPDU 1706 such that its transmission may end no later than the transmission of PPDU 1702 or no later than the beginning of the transmission of BA frame 1704. This ensures that the reception by STA 1604-2 of PPDU 1706 does not overlap with the transmission by STA 1604-1 of BA frame 1704.

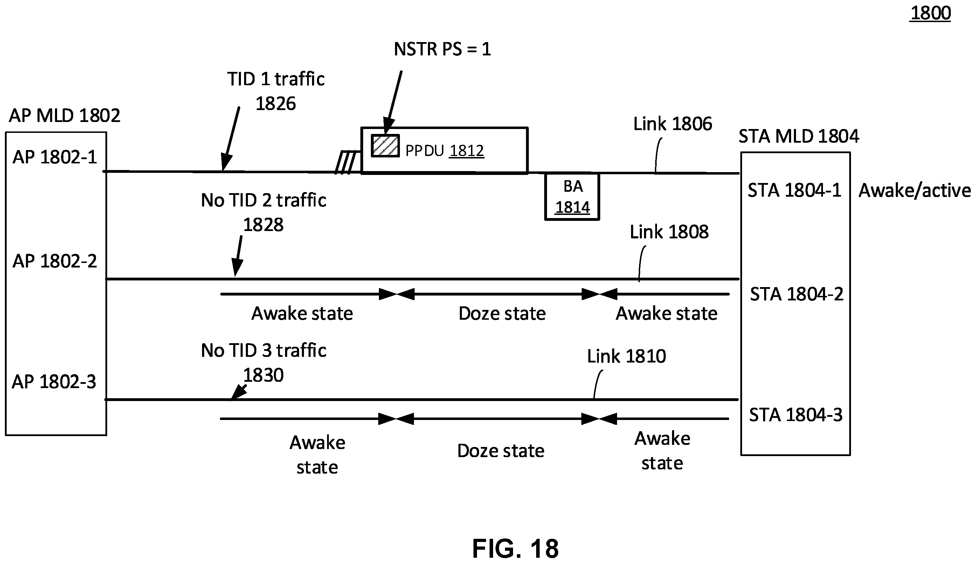

Examples 1800, 1900, 2000, and 2100 described herein with reference to FIGS. 18, 19, 20, and 21 show examples of an NSTR PS mode. Particularly, these examples may be used if the links between the AP MLD and the STA MLD comprise multiple NSTR link pairs for the STA MLD. Specifically, as shown in FIGS. 18-21, examples 1800-2100 include an AP MLD 1802 and a STA MLD 1804, where AP MLD 1802 includes three affiliated APs 1802-1, 1802-2, and 1802-3 and where STA MLD 1804 includes three affiliated STAs 1804-1, 1804-2, and 1804-3. AP MLD 1802 and STA MLD 1804 may be communicatively coupled by three links 1806, 1808, and 1810. Links 1806, 1808, and 1810 may correspond to different frequency bands from among a plurality of frequency bands (e.g., 2.4 GHz, 5 GHz, 60 GHz, etc.). Links 1806, 1808, and 1808 may correspond to different sub-bands within the same frequency band. Link 1806 may be established between AP 1802-1 and STA 1804-1, link 1808 may be established between AP 1802-2 and STA 1804-2, and link 1810 may be established between AP 1803-2 and STA 1804-2. AP MLD 1802 and STA MLD 1804 may use all of links 1806, 1808, and 1810 for communication. In examples 1800-2100, traffic associated with a first TID (e.g., TID 1 1826) may be mapped to link 1806, traffic associated with a second TID (e.g., TID 2 1828) may be mapped to link 1808, and traffic associated with a third TID (e.g., TID 3 1830) may be mapped to link 1810.

In examples 1800-2100 links 1806 and 1808 may be a first NSTR link pair for STA MLD 1804 and links 1806 and 1810 may be a second NSTR link pair for STA MLD 1804. STA MLD 1804 may not receive on link 1806 if sending (e.g., transmitting) on link 1808, and STA MLD 1804 may not send (e.g., transmit) on link 1806 if receiving on link 1808. Similarly, STA MLD 1804 may not receive on link 1806 if sending (e.g., transmitting) on link 1810, and STA MLD 1804 may not send (e.g., transmit) on link 1806 if receiving on link 1810.

In examples 1800-2100 AP MLD 1802 and STA MLD 1804 may support a NSTR PS mode as described herein. AP MLD 1802 and STA MLD 1804 may exchange frames that may indicate support of the NSTR PS mode as described herein. STA MLD 1804 may, for example, send (e.g., transmit) to AP MLD 1802, via link 1806, 1808, or 1810, an association and/or probe request frame. The association and/or probe request frame may indicate support of STA MLD 1804 of the NSTR PS mode. AP MLD 1802 may respond to the association and/or probe request frame by sending (e.g., transmitting) an association and/or probe response frame to STA MLD 1804. The association and/or probe request frame may indicate support of AP MLD 1802 of the NSTR PS mode. AP MLD 1802 may indicate its support of the NSTR PS mode in a broadcast frame (e.g., beacon frame). AP MLD 1802 and STA MLD 1804 may support exchanging NPS request and/or response frames as described herein in FIG. 14. In examples 1800-2100, the NSTR PS mode may be activated and/or enabled by both AP MLD 1802 and STA MLD 1804. AP MLD 1802 and/or STA MLD 1804 may thus be able to operate their affiliated APs/STAs in at least a first power state and a second power state. The first power state may be a doze/inactive state and the second power state may be an awake/active state, or the first power state may be a awake/active state and the second power state may be an doze/inactive state. In examples 1800-2100, the first power state is the doze/inactive state and that the second power state is the awake/active state. Examples 1800-2100 begin with all affiliated STAs of STA MLD 1804 in the second power state (e.g., the awake/active state).

As shown in FIG. 18, in example 1800, traffic may arrive at AP MLD 1802 for the first TID (e.g., TID 1 1826) that may be mapped to link 1806 without traffic arriving or being available for transmission for the second TID (e.g., TID 2 1828) that may be mapped to link 1808 or for the third TID (e.g., TID 3 1830) that may be mapped to link 1810. AP MLD 1802 may send (e.g., transmit) to STA MLD 1804, via link 1806, a PPDU 1812 comprising the traffic for the first TID based on gaining access to link 1806 via AP 1802-1.

PPDU 1812 may comprise a first field that may indicate whether STA 1804-2, corresponding to link 1808, and STA 1804-3, corresponding to link 1810, may be in a first power state. The first field may comprises an indication of whether STAs 1804-2 and 1804-3 may be in the first power state. The indication may indicate that STAs 1804-2 and 1804-3 mat not be in the first power state if AP MLD 1802 has buffered traffic for transmission to STA MLD 1804 via link 1808 and/or link 1810. The indication may indicate that STAs 1804-2 and 1804-3 may be in the first power state despite AP MLD 1802 having buffered traffic for transmission to STA MLD 1804 via link 1808 and/or link 1810. MLD 1802 may have only non-low latency traffic for transmission to STA MLD 1804 via link 1808 and/or link 1810 and/or may have higher priority traffic (e.g., low latency traffic) for transmission to another STA via link 1808 and/or link 1810. AP MLD 1802 may have traffic for transmission to STA MLD 1804 via link 1808 and/or link 1810 but link 1808 and/or link 1810 may be determined to be busy for a period time (e.g., the time that PPDU 1812 and BA frame 1814 are exchanged) such that there may not be enough time for the transmission of the traffic to STA MLD 1804. AP MLD 1802 may determine that maintaining STAs 1804-2 and 1804-3 in the second power state may not be necessary, for example, if AP MLD 1802 does not intend to send (e.g., transmit) to STA MLD 1802 via link 1808 and/or link 1810 while communicating with STA MLD 1804 via link 1806. AP MLD 1802 may regard STA 1804-2 and/or STA 1804-3 as being in the first power state (e.g., doze state) if the first field indicates that STA 1804-2 and/or STA 1804-3 are allowed to be in the first power state. AP 1802-2 and/or AP 1802-3 may not try to send (e.g., transmit) any frame to STA 1804-2 and/or STA 1804-3 if STA 1804-2 and/or STA 1804-3 are the first power state.

A first field may comprises an indication of whether AP MLD 1802 has buffered traffic for transmission to STA MLD 1804 via link 1808 and/or link 1810. STA MLD 1804 may interpret the indication as allowing STAs 1804-2 and 1804-3 to be in the first power state if the indication indicates that AP MLD 1802 does not have buffered traffic for transmission to STA MLD 1804 via link 1808 or link 1810 and as disallowing STAs 1804-2 and 1804-3 to be in the first power state if the indication indicates that AP MLD 1802 has buffered traffic for transmission to STA MLD 1804 via link 1808 or link 1810.

PPDU 1812 may further comprise a second field that may indicate a duration that STAs 1804-2 and 1804-3 may be in a first power state if STAs 1804-2 and 1804-3 are allowed to be in, or are in, the first power state. The second field may comprise a duration field that may indicate a first duration that may be used for communication, by AP MLD 1802 and via link 1806, with STA MLD 1804 after PPDU 1812. The second field may indicate the amount of time that link 1806 may be used for communication between AP MLD 1802 and STA MLD 1804 after reception of PPDU 1812 by STA MLD 1804. The duration field may be a TXOP duration field of PPDU 1812, and the first duration may comprise a TXOP duration. A subfield (e.g., TXOP field) of a signal field (e.g., signal (SIG), universal (U)-SIG, UHR-SIG, EHT-SIG) of a preamble part of PPDU 1812 may comprise the duration field. A subfield (e.g., Duration field) of a MAC header of PPDU 1812 may comprise the duration field.

In example 1800, AP MLD 1802 may set a first field of PPDU 1812 to 1 to indicate that STAs 1804-2 and 1804-3 may be in a first power state if there is no traffic for a second TID mapped to link 1808 or for a third TID mapped to link 1810. Alternatively, AP MLD 1802 may set a first field of PPDU 1812 to 1 to indicate that AP MLD 1802 has no buffered traffic for transmission to STA MLD 1804 via link 1808 or link 1810. STA MLD 1804 may determine that STAs 1804-2 and 1804-3 may be in the first power state and may transition STAs 1804-2 and 1804-3 from the second power state to the first power state. STA MLD 1804 may also determine, from the second field of PPDU 1812, the duration that STAs 1804-2 and 1804-3 may be in the first power state based on detecting PPDU 1812 and processing the first field. The duration may correspond to the remaining transmission time of PPDU 1812, the transmission time of a BA frame 1814 from STA MLD 1804 to AP MLD 1802, and/or the duration of a SIFS between PPDU 1812 and BA frame 1814, for example, in example 1800. STA MLD 1804 may maintain STAs 1804-2 and 1804-3 in the first power state until communication on link 1806 ends with STA MLD 1804 sending (e.g., transmitting) BA frame 1814, in response to PPDU 1812, to AP MLD 1802.

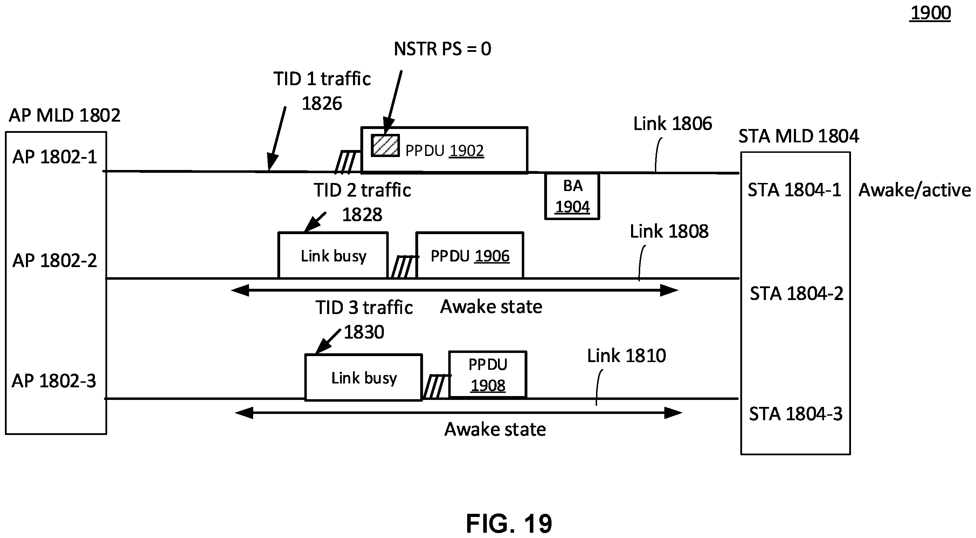

In example 1900, shown in FIG. 19, traffic may arrive or may be available for transmission at AP MLD 1802 for a first TID (e.g., TID 1 1826) mapped to link 1806, the second TID (e.g., TID 2 1828) mapped to link 1808, and the third TID (e.g., TID 3 1830) mapped to link 1810. However, AP MLD 1802, via AP 1802-1, may gain access to link 1806 before AP MLD 1802, via AP 1802-2, may gain access to link 1808 or, via AP 1802-3, may gain access to link 1810 due to links 1808 and 1810 being busy. AP MLD 1802 may begin sending (e.g., transmitting) to STA MLD 1804, via link 1806, a PPDU 1902 comprising the traffic for the first TID.

PPDU 1902 may be similar to PPDU 1812 described above. Specifically, PPDU 1902 may comprise a first field indicating whether STAs 1804-2 and 1804-3 may be in a first power state. PPDU 1902 may further comprise a second field indicating a duration that STAs 1804-2 and 1804-3 may be in the first power state, for example, if STAs 1804-2 and 1804-3 are allowed to be in, or are in, the first power state.

AP MLD 1802 may set a first field of PPDU 1902 to 0 to indicate that STAs 1804-2 and 1804-3 may not be in a first power state if traffic is available for transmission for the second TID mapped to link 1808 and for the third TID mapped to link 1810 (and knowing that link 1810 will become idle while PPDU 1902 is being transmitted). AP MLD 1802 may set a first field of PPDU 1902 to 0 to indicate that AP MLD 1802 has buffered traffic for transmission to STA MLD 1804 via link 1808 and/or link 1810. STA MLD 1804 may determine that STAs 1804-2 and 1804-3 may not be in the first power state and therefore may maintain STAs 1804-2 and 1804-3 in the second power state, for example, based on detecting PPDU 1902 and processing the first field. AP MLD 1802 may access link 1808 and may send (e.g., transmit) to STA MLD 1804, via link 1808, a PPDU 1906 comprising the traffic for the second TID if link 1808 becomes idle. Similarly, AP MLD 1802 may access link 1810 and may send (e.g., transmit) to STA MLD 1804, via link 1810, a PPDU 1908 comprising the traffic for the third TID if link 1810 becomes idle. AP MLD 1802 may construct PPDU 1906 or 1908 so that its transmission ends no later than the transmission of PPDU 1902 or no later than the beginning of the transmission of BA frame 1904, for example, as shown in FIG. 19. This ensures that the reception by STA 1804-2 of PPDU 1906, or the reception by STA 1804-3 of PPDU 1908, does not overlap with the transmission by STA 1804-1 of a BA frame 1904 in response to PPDU 1902.

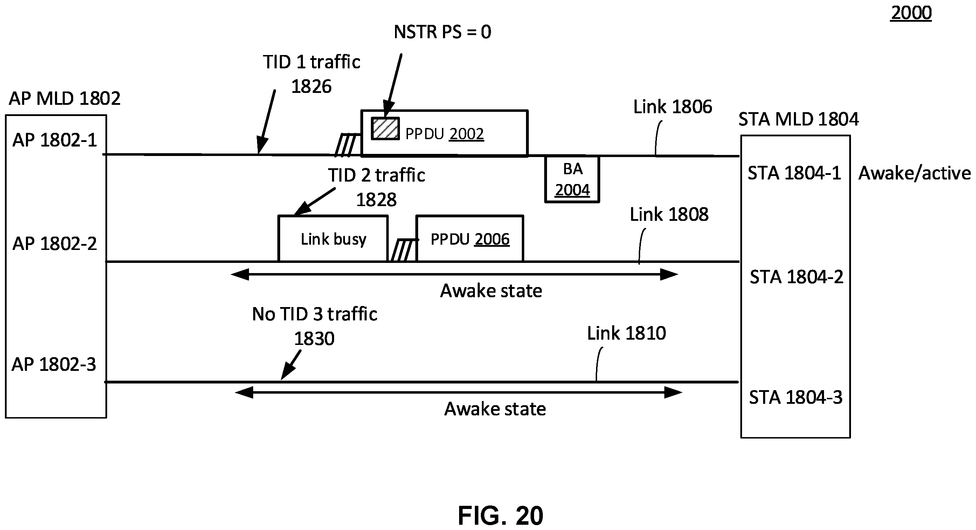

In example 2000, shown in FIG. 20, traffic may arrive or may be available for transmission at AP MLD 1802 for a first TID (e.g., TID 1 1826) mapped to link 1806 and for the second TID (e.g., TID 2 1828) mapped to link 1808 but not for the third TID (e.g., TID 3 1830) mapped to link 1810. AP MLD 1802, via AP 1802-1, may gain access to link 1806 before AP MLD 1802, via AP 1802-2, may gain access to link 1808, for example, if link 1808 is busy. AP MLD 1802 may send (e.g., transmit) to STA MLD 1804, via link 1806, a PPDU 2002 that may comprise the traffic for the first TID.

PPDU 2002 may be similar to PPDU 1812 or PPDU 1902 as described herein in FIGS. 18 and 19, respectively. Specifically, PPDU 2002 may comprise a first field that may indicate whether STAs 1804-2 and 1804-3 may be in a first power state. PPDU 2002 may further comprise a second field that may indicate a duration that STAs 1804-2 and 1804-3 may be in the first power state, if STAs 1804-2 and 1804-3 are allowed to be or are in in the first power state.

AP MLD 1802 may set a first field of PPDU 2002 to 0 to indicate that STAs 1804-2 and 1804-3 may not be in a first power state, for example, if traffic is available for transmission for a second TID mapped to link 1808 (and knowing that link 1808 will become idle while PPDU 2002 is being transmitted). AP MLD 1802 may set a first field of PPDU 2002 to 0 to indicate that AP MLD 1802 has buffered traffic for transmission to STA MLD 1804 via link 1808 and/or link 1810. STA MLD 1804 may determine that STAs 1804-2 and 1804-3 may not be in the first power state and may maintain STAs 1804-2 and 1804-3 in a second power state based on detecting PPDU 2002 and processing the first field. This allows AP MLD 1802 to access link 1808 and to send (e.g., transmit) to STA MLD 1804, via link 1808, a PPDU 2006 that may comprise the traffic for the second TID, for example, if link 1808 becomes idle. AP MLD 1802 may construct PPDU 2006 so that the transmission may end no later than the transmission of PPDU 2002 or no later than the beginning of the transmission of BA frame 2004. This ensures that the reception by STA 1804-2 of PPDU 2006 does not overlap with the transmission by STA 1804-1 of a BA frame 2004 in response to PPDU 2002.

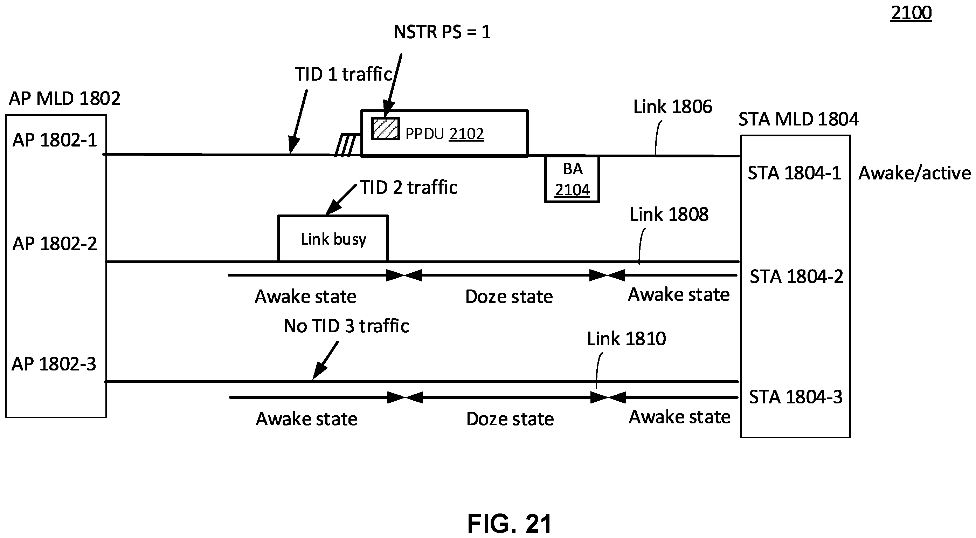

In example 2100, shown in FIG. 21, a traffic arrival and/or availability at AP MLD 1802 may be similar to that described in example 2000. Namely, traffic may arrive or may be available for transmission at AP MLD 1802 for a first TID (e.g., TID 1 1826) mapped to link 1806 and for the second TID (e.g., TID 2 1828) mapped to link 1808 but not for the third TID (e.g., TID 3 1830) mapped to link 1810. Due to link 1808 being busy, AP MLD 1802, via AP 1802-1, gains access to link 1806 before AP MLD 1802, via AP 1802-2, can gain access to link 1808. AP MLD 1802 thus begins sending (e.g., transmitting) to STA MLD 1804, via link 1806, a PPDU 2102 comprising the traffic for the first TID.

PPDU 2102 may be similar to PPDU 1812, PPDU 1902, or PPDU 2002 as described herein in FIGS. 18, 19, and 20, respectively. Specifically, PPDU 2102 may comprise a first field that may indicate whether STAs 1804-2 and 1804-3 may be in a first power state. PPDU 2102 may further comprise a second field that may indicate a duration that STAs 1804-2 and 1804-3 may be in the first power state, if STAs 1804-2 and 1804-3 are allowed to be or are in the first power state.

In contrast to example 2000, in example 2100, AP MLD 1802 may set a first field of PPDU 2102 to 1 to indicate that STAs 1804-2 and 1804-3 may not be in the first power state despite having traffic available for transmission for a second TID mapped to link 1808 (and knowing that link 1808 will become idle while PPDU 2102 is being transmitted). AP MLD 1802 may set the first field of PPDU 2102 to 1, for example, if AP MLD 1802 has only non-low latency traffic for transmission to STA MLD 1804 via link 1808 and/or if AP MLD 1802 has higher priority traffic (e.g., low latency traffic) for transmission to another STA via link 1808. AP MLD 1802 may set the first field of PPDU 2102 to 1 if, despite AP MLD 1802 having traffic for transmission to STA MLD 1804 via link 1808, link 1808 is anticipated to be busy for a period of time (e.g., the time that PPDU 2102 and BA frame 2104 are exchanged) longer than the time for the transmission of the traffic to STA MLD 1804. STA MLD 1804 may determine that STAs 1804-2 and 1804-3 may be in the first power state and may transition STAs 1804-2 and 1804-3 from a second power state to the first power state, for example, based on detecting PPDU 2102 and processing the first field. STA MLD 1804 may also determine, from the second field of PPDU 2102, the duration that STAs 1804-2 and 1804-3 may be in the first power state. In example 2100, the duration may correspond to the remaining transmission time of PPDU 2102, a transmission time of BA frame 2104 from STA MLD 1804 to AP MLD 1802, and a duration of a SIFS between PPDU 2102 and BA frame 2104. STA MLD 1804 may maintain STAs 1804-2 and 1804-3 in the first power state until communication on link 1806 ends with STA MLD 1804 sending (e.g., transmitting) BA frame 2104 to AP MLD 1802, for example, after or in response to receiving PPDU 2102. AP MLD 1802 may determine that STA 1804-2 and/or STA 1804-3 may be in the first power state (e.g., doze state), for example, if the first field indicates that STA 1804-2 or STA 1804-3 is allowed to be or is in the first power state. AP 1802-2 and/or AP 1802-3 may not try to send (e.g., transmit) any frame to STA 1804-2 and/or STA 1804-3 during a time period for which STA 1804-2 and/or STA 1804-3 may be in the first power state.

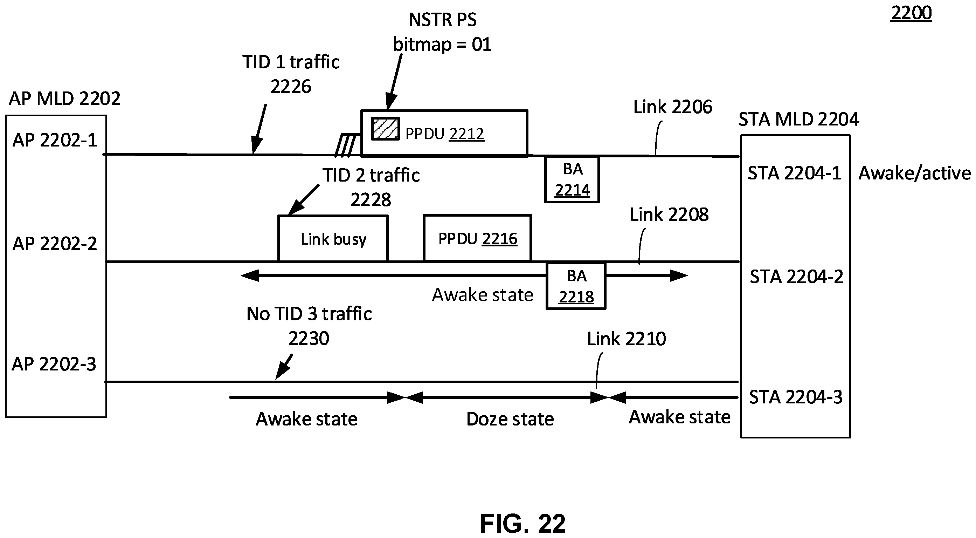

Example 2200 of FIG. 22 shows another NSTR PS mode. The NSTR PS mode shown in FIG. 22 may be used if the links between the AP MLD and the STA MLD comprise multiple NSTR link pairs for the STA MLD. Specifically, example 2200 includes an AP MLD 2202 and a STA MLD 2204, where AP MLD 2202 includes three affiliated APs 2202-1, 2202-2, and 2202-3 and where STA MLD 2204 includes three affiliated STAs 2204-1, 2204-2, and 2204-3. AP MLD 2202 and STA MLD 2204 may be communicatively coupled by three links 2206, 2208, and 2210. Links 2206, 2208, and 2210 may correspond to different frequency bands from among a plurality of frequency bands (e.g., 2.4 GHz, 5 GHz, 60 GHz, etc.). Links 2206, 2208, and 2208 may correspond to different sub-bands within the same frequency band. Link 2206 may be established between AP 2202-1 and STA 2204-1, link 2208 may be established between AP 2202-2 and STA 2204-2, and link 2210 may be established between AP 2202-3 and STA 2204-3. AP MLD 2202 and STA MLD 2204 may use all of links 2206, 2208, and 2210 for communication. In example 2200, traffic associated with a first TID (e.g., TID 1 2226) may be mapped to link 2206, that traffic associated with a second TID (e.g., TID 2 2228) may be mapped to link 2208, and that traffic associated with a third TID (e.g., TID 3 2230) may be mapped to link 2210.

In example 2200 links 2206 and 2208 may be a first NSTR link pair for STA MLD 2204 and links 2206 and 2210 may be a second NSTR link pair for STA MLD 2204. As such, STA MLD 2204 may not receive on link 2206 if sending (e.g., transmitting) on link 2208, and STA MLD 2204 may not send (e.g., transmit) on link 2206 if receiving on link 2208. Similarly, STA MLD 2204 may not receive on link 2206 if sending (e.g., transmitting) on link 2210, and STA MLD 2204 may not send (e.g., transmit) on link 2206 if receiving on link 2210.

In example 2200 AP MLD 2202 and STA MLD 2204 may support a NSTR PS mode described herein. AP MLD 2202 and STA MLD 2204 may exchange frames that may indicate support of the NSTR PS mode as described herein. STA MLD 2204 may send (e.g., transmit) to AP MLD 2202, via link 2206, 2208, or 2210, an association and/or probe request frame for example. The association and/or probe request frame may indicate support of STA MLD 2204 of the NSTR PS mode. AP MLD 2202 may respond to the association and/or probe request frame, for example, by sending (e.g., transmitting) an association and/or probe response frame to STA MLD 2204. The association and/or probe request frame may indicate support of AP MLD 2202 of the NSTR PS mode. AP MLD 2202 may indicate its support of the NSTR PS mode in a broadcast frame (e.g., beacon frame). AP MLD 2202 and STA MLD 2204 may support exchanging NPS request and/or response frames as described herein in FIG. 14. In example 2200, NSTR PS mode may be activated and/or enabled by both AP MLD 2202 and STA MLD 2204. AP MLD 2202 and/or STA MLD 2204 may thus be able to operate their affiliated APs/STAs in at least a first power state and a second power state. The first power state may be a doze/inactive state and the second power state may be an awake/active state, or vice versa. In example 2200, the first power state may be the doze/inactive state and that the second power state may be the awake/active state. Example 2200 may begin with all affiliated STAs of STA MLD 2204 in the second power state (e.g., the awake/active state).

As shown in FIG. 22, in example 2200, traffic may arrive or may be available for transmission at AP MLD 2202 for a first TID (e.g., TID 1 2226) mapped to link 2206 and for a second TID (e.g., TID 2 2228) mapped to link 2208 but not for a third TID (e.g., TID 3 2230) mapped to link 2210. AP MLD 2202, via AP 2202-1, may gain access to link 2206 before AP MLD 2202, via AP 2202-2, may gain access to link 2208. AP MLD 2202 thus may begin sending (e.g., transmitting) to STA MLD 2204, via link 2206, a PPDU 2212 that may comprise the traffic for the first TID, for example, if link 2208 is busy.

PPDU 2212 may comprise a first field that may comprise a bitmap that may indicate whether STA 2204-2, corresponding to link 2208, and STA 2204-3, corresponding to link 2210, may be in a first power state. The first field may comprise a first indication of whether STA 2204-2 may be in, or is in, the first power state and a second (explicit) indication of whether STA 2204-3 may be in, or is in, the first power state. The first indication may indicate that STAs 2204-2 may not be in the first power state if AP MLD 2202 has buffered traffic for transmission to STA MLD 2204 via link 2208. Similarly, the second indication may indicate that STAs 2204-3 may not be in the first power state if AP MLD 2202 has buffered traffic for transmission to STA MLD 2204 via link 2210. The first (second) indication may indicate that STA 2204-2 (2204-3) may be in the first power state despite AP MLD 2202 having buffered traffic for transmission to STA MLD 2204 via link 2208 (2210). AP MLD 2202 may have only non-low latency traffic for transmission to STA MLD 2204 via link 2208 (link 2210) and/or may have higher priority traffic (e.g., low latency traffic) for transmission to another STA via link 2208 (2210) for example. AP MLD 2202 may have traffic for transmission to STA MLD 2204 via link 2208 (2210) but link 2208 (2210) may be predicted to be busy for a time (e.g., the time that PPDU 2212 and BA frame 2214 are exchanged) longer than a time for the transmission of the traffic to STA 2204. AP MLD 2202 may thus determine that maintaining STA 2204-2 (2204-3) in the second power state may not be necessary if AP MLD 2202 does not intend to send (e.g., transmit) to STA MLD 2204 via link 2208 (2210) if communicating with STA MLD 2204 via link 2206.

A first field may comprise a first indication of whether AP MLD 2202 has buffered traffic for transmission to STA MLD 2204 via link 2208 and a second indication of whether AP MLD 2202 has buffered traffic for transmission to STA MLD 2204 via link 2210. STA MLD 2204 may interpret the indication as allowing STAs 2204-2 (2204-3) to be in a first power state if the first (second) indication indicates that AP MLD 2202 does not have buffered traffic for transmission to STA MLD 2204 via link 2208 (2210) and as disallowing STA 2204-2 (2204-3) to be in the first power state if the first (second) indication indicates that AP MLD 2202 has buffered traffic for transmission to STA MLD 2204 via link 2208 (2210).

PPDU 2212 may further comprise a second field indicating a duration that STA 2204-2 may be in a first power state if STA 2204-2 is in the first power state and a duration that STAs 2204-3 may be in the first power state if STA 2204-3 is in the first power state. The second field may comprise a duration field that may indicate a first duration to be used for communication, by AP MLD 2202 and via link 2206, with STA MLD 2204 after or in response to receiving PPDU 2212. The second field may indicate a duration of time that link 2206 may be used for communication between AP MLD 2202 and STA MLD 2204, for example, after or in response to reception of PPDU 2212 by STA MLD 2204. A duration field may be a TXOP duration field of PPDU 2212, and a first duration may comprise a TXOP duration. A subfield (e.g., TXOP field) of a signal field (e.g., signal (SIG), universal (U)-SIG, UHR-SIG, EHT-SIG) of a preamble part of PPDU 2212 may comprise a duration field. A subfield (e.g., Duration field) of a MAC header of PPDU 2212 may comprise the duration field.

In example 2200, AP MLD 2202 set a first bit (e.g., corresponding to link 2208) to 0 and a second bit (e.g., corresponding to link 2210) to 1 of a bitmap comprised in a first field of PPDU 2212 if traffic for a second TID mapped to link 2208 (and knowing that link 2208 will become idle while PPDU 2212 is being transmitted) but no traffic for the third TID mapped to link 2210. The setting of the first bit to 0 may indicate that STA 2204-2 may not be in the first power state or that AP MLD 2202 may have buffered traffic for transmission to STA MLD 2204 via link 2208. The setting of the second bit to 1 may indicate that STA 2204-3 may be in the first power state or that AP MLD 2202 may have no buffered traffic for transmission to STA MLD 2204 via link 2210. The bitmap comprised in the first field of PPDU 2212 may be 4 bits long. The third and fourth bits of the bitmap may be set to 00 or 11, for example, and may be ignored by STA MLD 2204.

STA MLD 2204 may determine that STA 2204-2 may not be in a first power state but that STA 2204-3 may be allowed to be in the first power state, for example, based on detecting PPDU 2212 and processing the first field. STA MLD 2204 may transition STA 2204-3 from a second power state to the first power state while maintaining STA 2204-2 in the second power state. STA MLD 2204 may also determine a duration that STA 2204-3 may be in the first power state from a second field of PPDU 2212. In example 2200, the duration may correspond to a remaining transmission time of PPDU 2212, a transmission time of a BA frame 2214 from STA MLD 2204 to AP MLD 2202, and/or a duration of a SIFS between PPDU 2212 and BA frame 2214. As such, STA MLD 2204 may maintain STA 2204-3 in the first power state until communication on link 2206 ends with STA MLD 2204 sending (e.g., transmitting) BA frame 2214 to AP MLD 2202, for example, after or in response to receiving PPDU 2212. Maintaining STA 2204-2 in the second power state allows AP MLD 2202, to access link 2208 and to send (e.g., transmit) to STA MLD 2204, via link 2208, a PPDU 2216 that may comprise the traffic for the second TID if link 2208 becomes idle. As shown in FIG. 22, AP MLD 2202 may construct PPDU 2216 so that the transmission of PPDU 2216 ends no later than the transmission of PPDU 2212 or no later than the beginning of the transmission of BA frame 2214. This ensures that the reception by STA 2204-2 of PPDU 2216 does not overlap with the transmission by STA 2204-1 of a BA frame 2214 in response to PPDU 2216. STA MLD 2204 may acknowledge PPDU 2216 by sending (e.g., transmitting), via STA 2204-2, a BA frame 2218 after an end of the reception of PPDU 2216. BA frame 2218 may be transmitted concurrently with BA frame 2214.

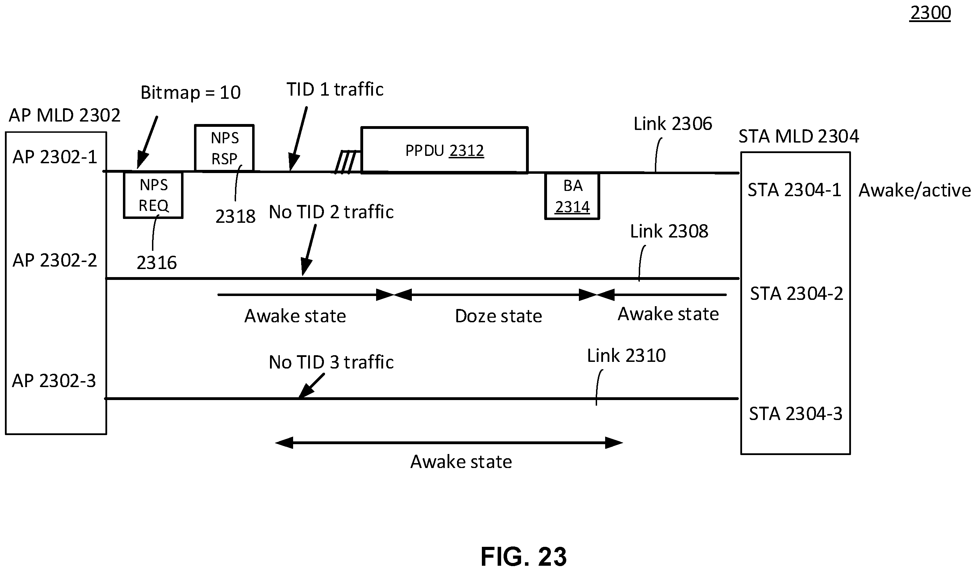

FIG. 23 shows an example of a further NSTR PS mode. A NSTR PS mode shown in FIG. 23 may also be used if the links between the AP MLD and the STA MLD comprise multiple NSTR link pairs for the STA MLD. Example 2300 may include an AP MLD 2302 and a STA MLD 2304, where AP MLD 2302 may include three affiliated APs 2302-1, 2302-2, and 2302-3 and where STA MLD 2304 may include three affiliated STAs 2304-1, 2304-2, and 2304-3, for example, in FIG. 23. AP MLD 2302 and STA MLD 2304 may be communicatively coupled by three links 2306, 2308, and 2310. Links 2306, 2308, and 2310 may correspond to different frequency bands from among a plurality of frequency bands (e.g., 2.4 GHz, 5 GHz, 60 GHz, etc.). Links 2306, 2308, and 2310 may correspond to different sub-bands within the same frequency band. Link 2306 may be established between AP 2302-1 and STA 2304-1, link 2308 may be established between AP 2302-2 and STA 2304-2, and link 2310 may be established between AP 2302-3 and STA 2304-3. AP MLD 2302 and STA MLD 2304 may use all of links 2306, 2308, and 2310 for communication. Traffic associated with a first TID (e.g., TID 1) may be mapped to link 2306, that traffic associated with a second TID (e.g., TID 2) may be mapped to link 2308, and that traffic associated with a third TID (e.g., TID 3) may be mapped to link 2310, for example, in example 2300.

In example 2300 links 2306 and 2308 may be a first NSTR link pair for STA MLD 2304 and that links 2306 and 2310 may be a second NSTR link pair for STA MLD 2304. STA MLD 2304 may not receive on link 2306, for example, if sending (e.g., transmitting) on link 2308, and vice versa. STA MLD 2304 may not receive on link 2306, for example, if sending (e.g., transmitting) on link 2310, and vice versa.

In example 2300 AP MLD 2302 and STA MLD 2304 may support the NSTR PS mode described herein. AP MLD 2302 and STA MLD 2304 may exchange frames that indicate support of the NSTR PS mode described herein (not shown in FIG. 23). STA MLD 2304 may send (e.g., transmit) to AP MLD 2302, for example, via link 2306, 2308, or 2310, an association and/or probe request frame. The association and/or probe request frame may indicate support of STA MLD 2304 of the NSTR PS mode. AP MLD 2302 may respond to the association and/or probe request frame by sending (e.g., transmitting) an association and/or probe response frame to STA MLD 2304. The association and/or probe request frame may indicate support of AP MLD 2302 of the NSTR PS mode. AP MLD 2302 may indicate its support of the NSTR PS mode in a broadcast frame (e.g., beacon frame). The NSTR PS mode may be activated/enabled by both AP MLD 2302 and STA MLD 2304, for example, in example 2300. AP MLD 2302 and/or STA MLD 2304 may thus be able to operate their affiliated APs/STAs in at least a first power state and a second power state. The first power state may be a doze/inactive state and the second power state may be an awake/active state, or vice versa. The first power state may be the doze/inactive state and that the second power state is the awake/active state, for example, in example 2300. Example 2300 may begin with all affiliated STAs of STA MLD 2304 in the second power state (the awake/active state).

The NSTR PS mode may include an exchange between STA MLD 2302 and AP MLD 2304, via link 2306, of an NPS request frame 2316 and an NPS response frame 2318, for example, in FIG. 23. NPS request frame 2316 may include a first bitmap that indicates, for each link forming an NSTR link pair with link 2306 whether STA MLD 2304 intends/requests transitioning the STA corresponding to the link to the first power state, for example, if STA MLD 2304 receives a PPDU via link 2306 from AP MLD 2304, for example, after or in response to the NPS request/response exchange. The first bitmap may include a first bit, corresponding to link 2308, set to 1 and a second bit, corresponding to link 2310, set to 0, for example, in example 2300. This may indicate that STA MLD 2304 intends/request to transition STA 2304-2 corresponding to link 2308 to the first power state, for example, if STA MLD 2304 receives a PPDU via link 2306 from AP MLD 2304, for example, after or in response to the NPS request/response exchange and to maintain STA 2304-3 corresponding to link 2310 in the second power state, for example, if STA MLD 2304 receives a PPDU via link 2310 from AP MLD 2304, for example, after or in response to the NPS request/response exchange. The first bitmap may further include a third bit corresponding to link 2306. The third bit in the first bitmap may be set to 1 or 0.

NPS response frame 2318 may acknowledge the information comprised in NPS request frame 2316. NPS response frame 2318 may include a second bitmap. The second bitmap may be identical to the first bitmap. NPS response frame 2318 may accept or reject a request comprised in NPS request frame 2316. NPS response frame 2318 may include a second bitmap. The second bitmap may be identical to or different than the first bitmap. MLD 2304 may operate in accordance with the second bitmap, for example, where the second bitmap may be different than the first bitmap, STA. NPS response frame 2318 may be an immediate response frame (e.g., Ack frame), for example, after or in response to NSP request frame 2316. The immediate response frame may accept a request comprised in NPS request frame 2316.

AP MLD 2302 may acknowledge or accept the first bitmap in NPS response frame 2318. AP MLD 2302 may acknowledge or accept the first bitmap in NPS response frame 2318, for example, based on (e.g., in response to) NPS request frame 2316 comprising the first bitmap, for example, n example 2300. STA MLD 2304 may activate/enable the NSTR PS mode for STA 2304-2 corresponding to link 2308 and deactivate/disable the NSTR PS mode for STA 2304-3 corresponding to link 2310 or maintains deactivated the NSTR PS for STA 2304-3 corresponding to link 2310, for example, after or in response to receiving NPS response frame 2318. STA MLD 2304 may transition STA 2304-2 corresponding to link 2308 to the first power state and maintain STA 2304-3 corresponding to link 2310 in the second power state, for example, after or in response to receiving NPS response frame 2318, for example, if STA MLD 2304 receives a PPDU via link 2306 from AP MLD 2304. AP MLD 2302 may send (e.g., transmit) to STA MLD 2302, via link 2306, a PPDU 2312 comprising the traffic for the first TID, for example, if traffic arrives at AP MLD 1802 for the first TID (TID 1) mapped to link 2306 (and in the absence of traffic arriving for the second TID (TID 2) mapped to link 2308 or for the third TID (TID 3) mapped to link 2310).

PPDU 2312 may not comprise a first field comprising a bitmap as in PPDU 2212. PPDU 2312 may not comprise a first field comprising a bitmap as in PPDU 2212, for example, as the power state for each of links 2308 and 2310 is indicated in the NPS request/response exchange.

PPDU 2312 may comprise a second field indicating a duration that STA 2304-2 is allowed to (or is recommended to be or may or shall) spend in the first power state. The second field comprises a duration field that may indicate a first duration to be used for communication, by AP MLD 2302 and via link 2306, with STA MLD 2304, for example, after or in response to PPDU 2312. The second field may indicate the amount of time that link 2306 will be used for communication between AP MLD 2302 and STA MLD 2304, for example, after or in response to reception of PPDU 2312 by STA MLD 2304. The duration field may be a TXOP duration field of PPDU 2312, and the first duration may comprise a TXOP duration. The duration field may be comprised in a subfield (e.g., TXOP field) of a signal field (e.g., signal (SIG), universal (U)-SIG, UHR-SIG, EHT-SIG) of a preamble part of PPDU 2312. The duration field may be comprised in a subfield (e.g., Duration field) of a MAC header of PPDU 2312. STA MLD 2304 determines that STA 2304-2 may be allowed to be in the first power state for the first duration, for example, on detecting PPDU 2312 and processing the second field. The duration may correspond to the remaining transmission time of PPDU 2312, the transmission time of a BA frame 2314 from STA MLD 2304 to AP MLD 2302, and the duration of a SIFS between PPDU 2312 and BA frame 2314, for example, in example 2300. STA MLD 2304 may maintain STA 2304-2 in the first power state until communication on link 2306 ends with STA MLD 2304 sending (e.g., transmitting) BA frame 2314, for example, after or in response to PPDU 2312, to AP MLD 2302.

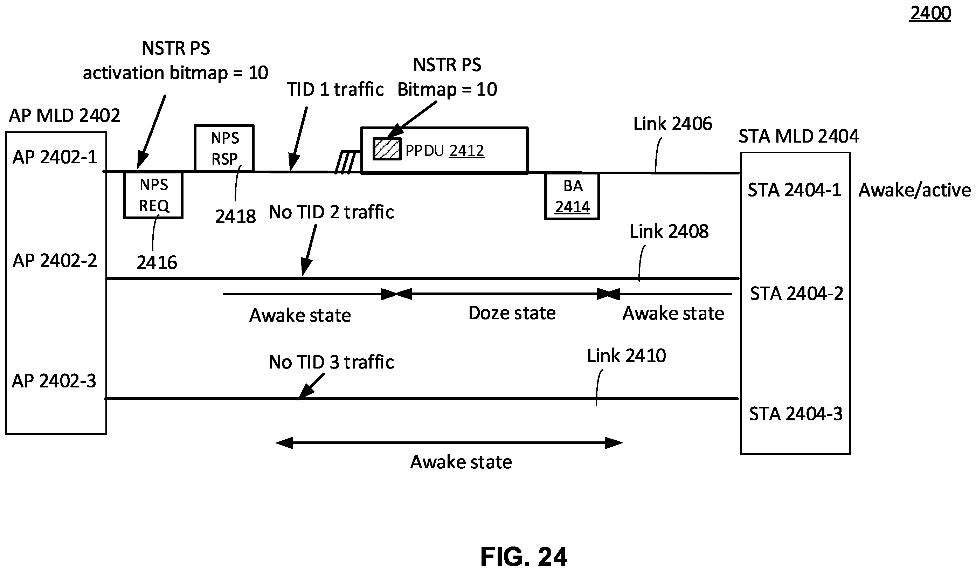

FIGS. 24-25 show examples 2400 and 2500 of a further NSTR PS mode. A NSTR PS mode shown in FIGS. 24-25 may also be used, for example, if the links between the AP MLD and the STA MLD comprise multiple NSTR link pairs for the STA MLD. Examples 2400 and 2500 each may include an AP MLD 2402 and a STA MLD 2404, where AP MLD 2402 may include three affiliated APs 2402-1, 2402-2, and 2402-3 and where STA MLD 2404 may include three affiliated STAs 2404-1, 2404-2, and 2404-3, for example, in FIGS. 24-25. AP MLD 2402 and STA MLD 2404 may be communicatively coupled by three links 2406, 2408, and 2410. Links 2406, 2408, and 2410 may correspond to different frequency bands from among a plurality of frequency bands (e.g., 2.4 GHz, 5 GHz, 60 GHz, etc.). Links 2406, 2408, and 2410 may correspond to different sub-bands within the same frequency band. Link 2406 may be established between AP 2402-1 and STA 2404-1, link 2408 may be established between AP 2402-2 and STA 2404-2, and link 2410 may be established between AP 2402-3 and STA 2404-3. AP MLD 2402 and STA MLD 2404 may use all of links 2406, 2408, and 2410 for communication. Traffic associated with a first TID (e.g., TID 1) may be mapped to link 2406, that traffic associated with a second TID (e.g., TID 2) is mapped to link 2408, and that traffic associated with a third TID (e.g., TID 3) is mapped to link 2410, for example, in examples 2400 and 2500.

In examples 2400 and 2500 links 2406 and 2408 may be a first NSTR link pair for STA MLD 2404 and that links 2406 and 2410 are a second NSTR link pair for STA MLD 2404. STA MLD 2404 may not receive on link 2406, for example, if sending (e.g., transmitting) on link 2408, and vice versa. STA MLD 2404 may not receive on link 2406, for example, if sending (e.g., transmitting) on link 2410, and vice versa.

In examples 2400 and 2500 AP MLD 2402 and STA MLD 2404 support the NSTR PS mode described herein. AP MLD 2402 and STA MLD 2404 may exchange frames that indicate support of the NSTR PS mode described herein (not shown in FIG. 24). STA MLD 2404 may send (e.g., transmit) to AP MLD 2402, for example, via link 2406, 2408, or 2410, an association and/or probe request frame. The association and/or probe request frame may indicate support of STA MLD 2404 of the NSTR PS mode. AP MLD 2402 may respond to the association and/or probe request frame by sending (e.g., transmitting) an association and/or probe response frame to STA MLD 2404. The association and/or probe request frame may indicate support of AP MLD 2402 of the NSTR PS mode. AP MLD 2402 may indicate its support of the NSTR PS mode in a broadcast frame (e.g., beacon frame). The NSTR PS mode may be activated/enabled by both AP MLD 2402 and STA MLD 2404, for example, in examples 2400 and 2500. AP MLD 2402 and/or STA MLD 2404 may thus be able to operate their affiliated APs/STAs in at least a first power state and a second power state. The first power state may be a doze/inactive state and the second power state may be an awake/active state, or vice versa. The first power state may be the doze/inactive state and that the second power state is the awake/active state, for example, in example 2400. Example 2400 may begin with all affiliated STAs of STA MLD 2404 in the second power state (the awake/active state).

The NSTR PS mode may include an exchange between STA MLD 2404 and AP MLD 2402, via link 2406, of an NPS request frame 2416 and an NPS response frame 2418, for example, in FIGS. 24-25. NPS request frame 2416 may include a first bitmap that indicates, for each link forming an NSTR link pair with link 2406 whether STA MLD 2404 intends/requests to operate the STA corresponding to the link in the NSTR PS mode (i.e., whether STA MLD 2404 intends/requests to activate/enable the NSTR PS mode for the link), for example, if STA MLD 2404 receives a PPDU via link 2406 from AP MLD 2402, for example, after or in response to the NPS request/response exchange. The first bitmap may include a first bit, corresponding to link 2408, set to 1 and a second bit, corresponding to link 2410, set to 0, for example, in examples 2400 and 2500. This may indicate that STA MLD 2404 intends/request to operate STA 2404-2 corresponding to link 2408 in the NSTR PS mode, for example, after or in response to the NPS request/response exchange and to not operate STA 2404-3 corresponding to link 2410 in the NSTR PS mode, for example, after or in response to the NPS request/response exchange. The first bitmap may further include a third bit corresponding to link 2406. The third bit in the first bitmap may be set to 1 or 0.

NPS response frame 2418 may acknowledge the information comprised in NPS request frame 2416. NPS response frame 2418 may include a second bitmap. The second bitmap may be identical to the first bitmap. NPS response frame 2418 may accept or reject a request comprised in NPS request frame 2416. NPS response frame 2418 may include a second bitmap. The second bitmap may be identical to or different than the first bitmap. STA MLD 2404 may operate in accordance with the second bitmap, for example, where the second bitmap is different than the first bitmap. NPS response frame 2418 may be an immediate response frame (e.g., Ack frame), for example, after or in response to NPS request frame 2416. The immediate response frame may accept a request comprised in NPS request frame 2416.

AP MLD 2402 may acknowledge or accept the first bitmap in NPS response frame 2418. AP MLD 2402 may acknowledge and/or accept the first bitmap in NPS response frame 2418, for example, based on (e.g., in response to) NPS request frame 2416 comprising the first bitmap, for example, in examples 2400 and 2500. STA MLD 2404 may activate/enable the NSTR PS mode for STA 2404-2 corresponding to link 2408 and deactivate/disable the NSTR PS mode for STA 2404-3 corresponding to link 2410 or maintains deactivated the NSTR PS for STA 2404-3 corresponding to link 2410, for example, after or in response to receiving NPS response frame 2418.

AP MLD 2402 may send (e.g., transmit) to STA MLD 2402, via link 2406, a PPDU 2412 comprising the traffic for the first TID. AP MLD 2402 may send (e.g., transmit) to STA MLD 2402, via link 2406, a PPDU 2412 comprising the traffic for the first TID, for example, if traffic arrives at AP MLD 1802 for the first TID (TID 1) mapped to link 2406 (and in the absence of traffic arriving for the second TID (TID 2) mapped to link 2408 or for the third TID (TID 3) mapped to link 2410), for example, in example 2400.

PPDU 2412 may comprise a first field comprising a bitmap indicating whether STA 2404-2, corresponding to link 2408, and STA 2404-3, corresponding to link 2410, are allowed to be (or is recommended to be or may be or shall be) in the first power state. The first field may comprise a first indication of whether STA 2404-2 is allowed to be (or is recommended to be or may be or shall be) in the first power state and a second indication of whether STA 2404-3 is allowed to be (or is recommended to be or may be or shall be) in the first power state.

The first indication and the second indication may be set based on whether the NSTR PS mode is activated for STA 2404-2 and STA 2404-3 respectively. The first/second indication may be set to disallow STA 2404-2/2404-3 from being in the first power state if the NSTR PS is deactivated for STA 2404-2/2404-3. The first/second indication may be set to allow or disallow STA 2404-2/2404-3 to be in the first power state, for example, if the NSTR PS mode is activated for STA 2404-2/2404-3. The first indication may indicate that STAs 2404-2 is not allowed to be (or is not recommended to be or may not be or shall not be) in the first power state, for example, if AP MLD 2402 has buffered traffic for transmission to STA MLD 2404 via link 2408. The second indication may indicate that STAs 2404-3 is not allowed to be (or is not recommended to be or may not be or shall not be) in the first power state, for example, if AP MLD 2402 has buffered traffic for transmission to STA MLD 2404 via link 2410. The first (second) indication may indicate that STA 2404-2 (2404-3) is allowed to be (or is recommended to be or may be or shall be) in the first power state, for example, despite AP MLD 2402 having buffered traffic for transmission to STA MLD 2404 via link 2408 (2410). AP MLD 2402 may have only non-low latency traffic for transmission to STA MLD 2404 via link 2408 (link 2410) and/or may have higher priority traffic (e.g., low latency traffic) for transmission to another STA via link 2408 (2410). AP MLD 2402 may have traffic for transmission to STA MLD 2404 via link 2408 (link 2410) but link 2408 (link 2410) may be anticipated to be busy for a long time (e.g., the time that PPDU 2412 and BA frame 2414 are exchanged) such that there may not be enough time for the transmission of the traffic to STA MLD 2404. AP MLD 2402 may thus determine that maintaining STA 2404-2 (2404-3) in the second power state is not necessary given that AP MLD 2402 does not intend to send (e.g., transmit) to STA MLD 2402 via link 2408 (2410), for example, if communicating with STA MLD 2404 via link 2406. AP MLD 2402 may regard it as that STA 2404-2 (STA 2404-3) may be in the first power state (e.g., doze state), for example, if the first field indicates that STA 2404-2 (STA 2404-3) is allowed to be (or is recommended to be or may be or shall be) in the first power state. AP 2402-2 (AP 2402-3) may not try to send (e.g., transmit) any frame to STA 2404-2 (STA 2404-3), for example, during a time period for which STA 2404-2 (STA 2404-3) may be in the first power state.

PPDU 2412 may further comprise a second field indicating a duration that STA 2404-2 is allowed to (or is recommended to be or may or shall) spend in the first power state (if STA 2404-2 is allowed to be (or is recommended to be or may be or shall be) in the first power state) and that STA 2404-3 may be allowed to (or is recommended to be or may or shall) spend in the first power state (if STA 2404-3 is allowed to be (or is recommended to be or may be or shall be) in the first power state). The second field may comprise a duration field that indicates a first duration to be used for communication, by AP MLD 2402 and via link 2406, with STA MLD 2404, for example, after or in response to PPDU 2412. The second field may indicate the amount of time that link 2406 will be used for communication between AP MLD 2402 and STA MLD 2404, for example, after or in response to reception of PPDU 2412 by STA MLD 2404. The duration field may be a TXOP duration field of PPDU 2412, and the first duration may comprise a TXOP duration. The duration field may be comprised in a subfield (e.g., TXOP field) of a signal field (e.g., signal (SIG), universal (U)-SIG, UHR-SIG, EHT-SIG) of a preamble part of PPDU 2412. The duration field may be comprised in a subfield (e.g., Duration field) of a MAC header of PPDU 2412.

AP MLD 2402 may set to 1 a first bit (corresponding to link 2408) of the bitmap comprised in the first field of PPDU 2412. AP MLD 2402 may set to 1 a first bit (corresponding to link 2408) of the bitmap comprised in the first field of PPDU 2412, for example, based on the NSTR PS mode being activated for STA 2404-2 and AP MLD 2402 having no traffic for the second TID mapped to link 2408, for example, in example 2400. AP MLD 2402 may set to 0 a second bit (corresponding to link 2410) of the bitmap comprised in the first field of PPDU 2412. AP MLD 2402 may set to 0 a second bit (corresponding to link 2410) of the bitmap comprised in the first field of PPDU 2412, for example, based on the NSTR PS mode being deactivated for STA 2404-3 (and regardless of whether AP MLD 2402 has traffic for the third TID mapped to link 2410). The bitmap of PPDU 2412 may not comprise a bit corresponding to a STA deactivated for the NSTR PS mode (e.g., the second bit of the bitmap of PPDU 2412).

STA MLD 2404 may determine that STA 2404-2 is allowed to be in the first power state but that STA 2404-3 is not allowed to be (or is not recommended to be or may not be or shall not be) in the first power state, in response to detecting PPDU 2412 and processing the first field. STA MLD 2404 may transition STA 2404-2 from the second power state to the first power state, for example, if maintaining STA 2404-3 in the second power state. STA MLD 2404 may also determine the duration that STA 2404-2 is allowed to be (or is recommended to be or may be or shall be) in the first power state from the second field of PPDU 2412. The duration may correspond to the remaining transmission time of PPDU 2412, the transmission time of a BA frame 2414 from STA MLD 2404 to AP MLD 2402, and the duration of a SIFS between PPDU 2412 and BA frame 2414, for example, in example 2400. STA MLD 2404 may maintain STA 2404-2 in the first power state until communication on link 2406 ends with STA MLD 2404 sending (e.g., transmitting) BA frame 2414, for example, after or in response to PPDU 2412, to AP MLD 2402.

Traffic may arrive or may be available for transmission at AP MLD 2402 for the first TID (TID 1) mapped to link 2406 and for the second TID (TID 2) mapped to link 2408 but not for the third TID (TID 3) mapped to link 2410. Traffic may arrive or may be available for transmission at AP MLD 2402 for the first TID (TID 1) mapped to link 2406 and for the second TID (TID 2) mapped to link 2408 but not for the third TID (TID 3) mapped to link 2410, for example, after or in response to the NPS request/response exchange, for example, in example 2500. AP MLD 2402, via AP 2402-1, may gain access to link 2406, for example, before AP MLD 2402, via AP 2402-2, can gain access to link 2408, for example, due to link 2408 being busy. AP MLD 2402 may begin sending (e.g., transmitting) to STA MLD 2404, via link 2406, a PPDU 2502 comprising the traffic for the first TID.

PPDU 2502 may be similar to PPDU 2412 as described herein. PPDU 2502 may comprise a first field comprising a bitmap indicating whether STA 2404-2, corresponding to link 2408, and STA 2404-3, corresponding to link 2410, are allowed to be (or is recommended to be or may be or shall be) in the first power state. PPDU 2502 may further comprise a second field indicating a duration that STA 2404-2 is allowed to (or may or shall) spend in the first power state (if STA 2404-2 is allowed to be (or is recommended to be or may be or shall be) in the first power state) and that STA 2404-3 is allowed to (or may or shall) spend in the first power state (if STA 2404-3 is allowed to be (or is recommended to be or may be or shall be) in the first power state).

AP MLD 2402 may set to 0 a first bit (corresponding to link 2408) of the bitmap comprised in the first field of PPDU 2502. AP MLD 2402 may set to 0 a first bit (corresponding to link 2408) of the bitmap comprised in the first field of PPDU 2502, for example, based on the NSTR PS mode being activated for STA 2404-2 and AP MLD 2402 having traffic for the second TID mapped to link 2408, for example, in example 2500. AP MLD 2402 may set to 0 a second bit (corresponding to link 2410) of the bitmap comprised in the first field of PPDU 2502, for example, based on the NSTR PS mode being deactivated for STA 2404-3 (and regardless of whether AP MLD 2402 has traffic for the third TID mapped to link 2410).

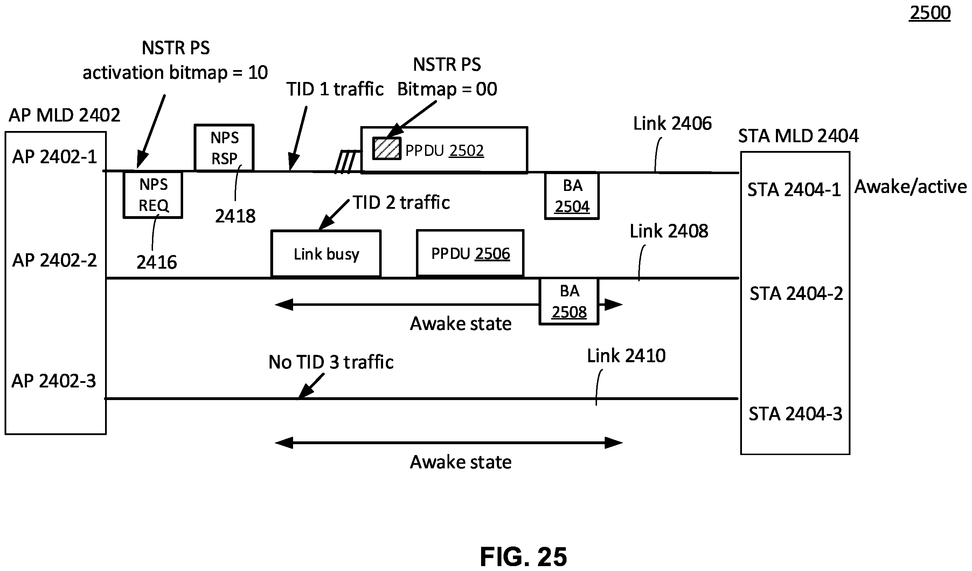

STA MLD 2404 may determine that both STAs 2404-2 and STA 2404-3 are not allowed to be in the first power state, for example, in response to detecting PPDU 2502 and processing the first field. STA MLD 2404 may maintain both STAs 2404-2 and 2404-3 in the second power state. STA MLD 2404 may also determine the duration that STA 2404-2 is allowed to be (or is recommended to be or may be or shall be) in the first power state from the second field of PPDU 2412. The maintenance of STA 2404-2 in the second power state may allow AP MLD 2402, for example, if link 2408 becomes idle, to access link 2408 and to send (e.g., transmit) to STA MLD 2404, via link 2408, a PPDU 2506 comprising the traffic for the second TID. AP MLD 2402 may construct PPDU 2506 such that its transmission ends no later than the transmission of PPDU 2502 or no later than the beginning of the transmission of BA frame 2504, for example, in FIG. 25. This may ensure that the reception by STA 2404-2 of PPDU 2506 does not overlap with the transmission by STA 2404-1 of a BA frame 2504, for example, after or in response to PPDU 2502. STA MLD 2402 may acknowledge PPDU 2506 by sending (e.g., transmitting), via STA 2404-2, a BA frame 2508, for example, after or in response to an end of the reception of PPDU 2506. BA frame 2508 may be sent (e.g., transmitted) concurrently with BA frame 2504.

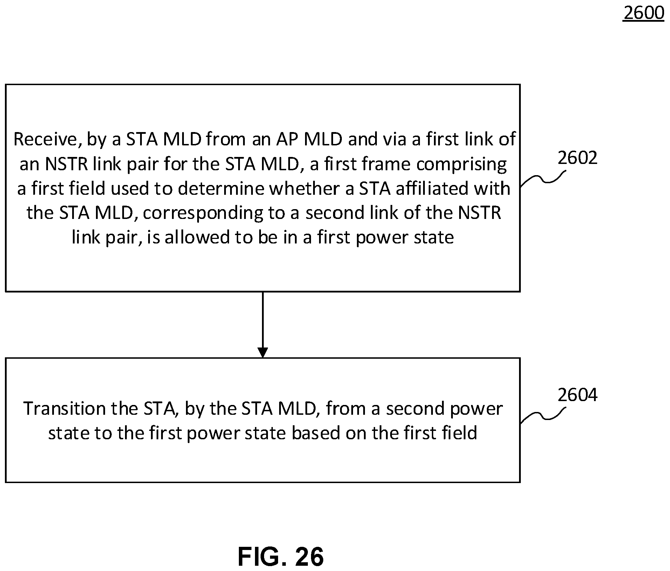

FIG. 26 shows an example process. Example process 2600 may be performed by a STA MLD, such as STA MLD 1604, 1804, 2204, or 2404, for example. The STA MLD may be communicatively coupled with an AP MLD via a plurality of links. The plurality of links may comprise one or more NSTR link pairs for the STA MLD. The STA MLD and/or the AP MLD may support an NSTR PS mode. According to the NSTR PS mode, the STA MLD may operate an affiliated STA, corresponding to a link of an NSTR link pair for the STA MLD, in a first power state or in a second power state and may transition the affiliated STA between the first power state and the second power state. The first power state may comprise a doze or an inactive state. The second power state may comprise an awake or an inactive state. Process 2600 may include steps 2602 and 2604, for example, in FIG. 26.

Step 2602 may include receiving, by the STA MLD from the AP MLD and via a first link of an NSTR link pair for the STA MLD, a first frame comprising a first field indicating whether a STA affiliated with the STA MLD, corresponding to a second link of the NSTR link pair, is allowed to be in a first power state. The first power state comprises a doze or an inactive state.

The STA MLD may not be able to receive any frame from the AP MLD on the first link. The STA MLD may not be able to receive any frame from the AP MLD on the first link, for example, if the STA MLD sends (e.g., transmits) any frame to the AP MLD on the second link. The STA MLD may not send (e.g., transmit) any frame to the AP MLD on the first link, for example, if the STA MLD receives any frame from the AP MLD on the second link.

The first field may further indicate whether a second STA affiliated with the STA MLD, corresponding to a third link of a second NSTR link pair comprising the first link, is allowed to be in the first power state. The first field may comprise a bitmap comprising a first bit indicating whether the STA is allowed to be in the first power state and a second bit indicating whether the second STA is allowed to be in the first power state. Process 2600 may further comprise sending (e.g., transmitting), by the STA MLD to the AP MLD, a frame indicating a first activation status of the NSTR PS mode for the STA and a second activation status of the NSTR PS mode for the second STA. The first (second) activation status may indicate whether the STA MLD intends/requests to operate the STA (second STA) in the first power state, for example, after or in response to the frame. The first bit may be based on the first activation status of the NSTR PS mode for the STA, and the second bit may be based on the second activation status of the NSTR PS mode for the second STA.

Step 2604 may include transitioning the STA, by the STA MLD, from a second power state to the first power state based on the first field.

The first frame may further comprise a second field indicating a duration for the first power state of the STA. The first frame may further comprises a second field indicating a duration for the first power state of the STA, for example, if the STA is allowed to be in the first power state. Transitioning the STA from the second power state to the first power state in step 2604 may be further based on the second field. The second field may comprise a duration field indicating a first duration to be used for communicating, by the AP and via the first link, with the STA MLD, for example, after or in response to the first frame. The first duration may comprise a TXOP duration.

The first field may comprise an (explicit) indication of whether the STA is allowed to be in the first power state. Step 2604 may comprise transitioning the STA from the second power state to the first power state, for example, if the indication indicates that the STA is allowed to be in the first power state. The indication may indicate that the STA is allowed to be in the first power state, for example, if the AP MLD does not have buffered traffic for transmission to the STA MLD via the second link. Step 2604 may further comprise maintaining the STA in the second power state, for example, if the indication indicates that the STA is not allowed to be in the first power state. The indication may indicate that the STA is not allowed to be in the first power state, for example, if the AP MLD has buffered traffic for transmission to the STA MLD via the second link.

The first field may comprise an indication of whether the AP MLD has buffered traffic for transmission to the STA MLD via the second link. The STA may be allowed to be in the first power state, for example, if the indication indicates that the AP MLD does not have buffered traffic for transmission to the STA MLD via the second link. The STA may not be allowed to be in the first power state, for example, if the indication indicates that the AP MLD has buffered traffic for transmission to the STA MLD via the second link. Step 2604 may comprise transitioning the STA from the second power state to the first power state, for example, if the indication indicates that the AP MLD does not have buffered traffic for transmission to the STA MLD via the second link. Step 2604 may further comprise maintaining the STA in the second power state, for example, if the indication indicates that the AP MLD has buffered traffic for transmission to the STA MLD via the second link.

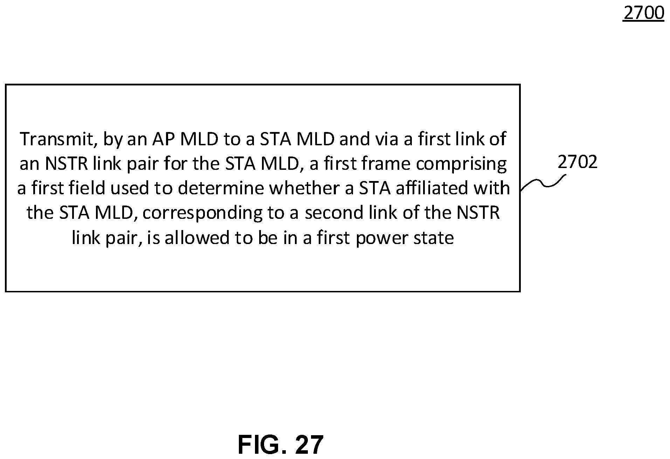

FIG. 27 shows an example process. Example process 2700 may be performed by an AP MLD, such as AP MLD 1602, 1802, 2202, or 2402, for example. The AP MLD may be communicatively coupled with a STA MLD via a plurality of links. The plurality of links may comprise one or more NSTR link pairs for the STA MLD. The STA MLD and/or the AP MLD may support an NSTR PS mode. According to the NSTR PS mode, the STA MLD may operate an affiliated STA, corresponding to a link of an NSTR link pair for the STA MLD, in a first power state or in a second power state and may transition the affiliated STA between the first power state and the second power state. The first power state may comprise a doze or an inactive state. The second power state may comprise an awake or an inactive state.

Process 2700 may include, in step 2702, sending (e.g., transmitting), by the AP MLD to the STA MLD and via a first link of an NSTR link pair for the STA MLD, a first frame comprising a first field indicating whether a STA affiliated with the STA MLD, corresponding to a second link of the NSTR link pair, is allowed to be in the first power state, for example, in FIG. 27.

The STA MLD may not be able to receive any frame from the AP MLD on the first link. The STA MLD may not be able to receive any frame from the AP MLD on the first link, for example, if the STA MLD sends (e.g., transmits) any frame to the AP MLD on the second link. The STA MLD may not send (e.g., transmit) any frame to the AP MLD on the first link, for example, if the STA MLD receives any frame from the AP MLD on the second link.

The first field may further be indicating whether a second STA affiliated with the STA MLD, corresponding to a third link of a second NSTR link pair comprising the first link, is allowed to be in the first power state. The first field may comprise a bitmap comprising a first bit indicating whether the STA is allowed to be in the first power state and a second bit indicating whether the second STA is allowed to be in the first power state. Process 2700 may further comprise receiving, by the AP MLD from the STA MLD, a frame indicating a first activation status of the NSTR PS mode for the STA and a second activation status of the NSTR PS mode for the second STA. The first (second) activation status may indicate whether the STA MLD intends/requests to operate the STA (second STA) in the first power state, for example, after or in response to the frame. The first bit may be based on the first activation status of the NSTR PS mode for the STA, and the second bit may be based on the second activation status of the NSTR PS mode for the second STA.

The first frame further may comprise a second field indicating a duration for the first power state of the STA if the STA is allowed to be in the first power state. The second field may comprise a duration field indicating a first duration to be used for communicating, by the AP and via the first link, with the STA MLD, for example, after or in response to the first frame. The first duration may comprise a TXOP duration. Process 2700 may further comprise sending (e.g., transmitting), by the AP MLD to the STA MLD and via the second link, a second frame, for example, after the duration, for example, where the STA is allowed to be in the first power state.

The first field may comprise an (explicit) indication of whether the STA is allowed to be in the first power state. The indication may indicate that the STA is allowed to be in the first power state, for example, if the AP MLD may not have buffered traffic for transmission to the STA MLD via the second link. The indication may indicate that the STA is not allowed to be in the first power state, for example, if the AP MLD has buffered traffic for transmission to the STA MLD via the second link.

The first field may comprise an indication of whether the AP MLD has buffered traffic for transmission to the STA MLD via the second link. The STA may be allowed to be in the first power state, for example, if the indication indicates that the AP MLD does not have buffered traffic for transmission to the STA MLD via the second link. The STA may not be allowed to be in the first power state, for example, if the indication indicates that the AP MLD has buffered traffic for transmission to the STA MLD via the second link.

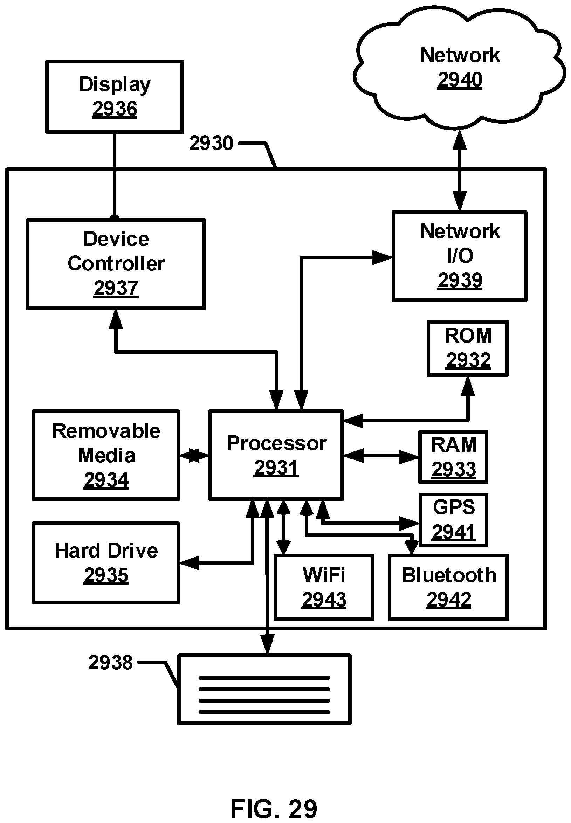

FIG. 29 shows example elements of a computing device that may be used to implement any of the various devices described herein, including, for example, a STA, an AP, communication devices, and/or any computing and/or communication device described herein. The computing device 2930 may comprise one or more processors 2931, which may execute instructions stored in the random-access memory (RAM) 2933, the removable media 2934 (such as a Universal Serial Bus (USB) drive, compact disk (CD) or digital versatile disk (DVD), or floppy disk drive), or any other desired storage medium. Instructions may also be stored in an attached (or internal) hard drive 2935. The computing device 2930 may also comprise a security processor (not shown), which may execute instructions of one or more computer programs to monitor the processes executing on the processor 2931 and any process that requests access to any hardware and/or software components of the computing device 2930 (e.g., ROM 2932, RAM 2933, the removable media 2934, the hard drive 2935, the device controller 2937, a network interface 2939, a GPS 2941, a Bluetooth interface 2942, a WiFi interface 2943, etc.). The computing device 2930 may comprise one or more output devices, such as the display 2936 (e.g., a screen, a display device, a monitor, a television, etc.), and may comprise one or more output device controllers 2937, such as a video processor. There may also be one or more user input devices 2938, such as a remote control, keyboard, mouse, touch screen, microphone, etc. The computing device 2930 may also comprise one or more network interfaces, such as a network interface 2939, which may be a wired interface, a wireless interface, or a combination of the two. The network interface 2939 may provide an interface for the computing device 2930 to communicate with a network 2940 (e.g., a RAN, or any other network). The network interface 2939 may comprise a modem (e.g., a cable modem), and the external network 2940 may comprise communication links, an external network, an in-home network, a provider's wireless, coaxial, fiber, or hybrid fiber/coaxial distribution system (e.g., a DOCSIS network), or any other desired network. Additionally, the computing device 2930 may comprise a location-detecting device, such as a global positioning system (GPS) microprocessor 2941, which may be configured to receive and process global positioning signals and determine, with possible assistance from an external server and antenna, a geographic position of the computing device 2930.

The example in FIG. 29 may be a hardware configuration, although the components shown may be implemented as software as well. Modifications may be made to add, remove, combine, divide, etc. components of the computing device 2930 as desired. Additionally, the components may be implemented using basic computing devices and components, and the same components (e.g., processor 2931, ROM storage 2932, display 2936, etc.) may be used to implement any of the other computing devices and components described herein. For example, the various components described herein may be implemented using computing devices having components such as a processor executing computer-executable instructions stored on a computer-readable medium, as shown in FIG. 29. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising receiving, by a first multi-link device, a first frame comprising a first field indicating whether a station affiliated with a multi-link device, corresponding to a first link of a non-simultaneous transmission-reception link pair, is allowed to be in a first power state.

Clause 2. The method of clause 1, further comprising sending, based on the first field, an indication to transition the station to the first power state.

Clause 3. The method of any one of clauses 1-2, further comprising receiving an indication to operate in a non-simultaneous transmission-reception power saving mode.

Clause 4. The method of any one of clauses 1-3, wherein the first frame further comprises a second field indicating a duration of the first power state of the station; and wherein the sending is further based on the second field.

Clause 5. The method of clause 4, wherein the duration of the first power state of the station comprises a transmit opportunity duration.

Clause 6. The method of any one of clauses 1-5, wherein the receiving is, via a second link, from an access point multi-link device of the non-simultaneous transmission-reception link pair.

Clause 7. The method of any one of clauses 1-6, wherein the sending the indication to transition the station to the first power state is based on the first field indicating that there is buffered data for transmission via the first link.

Clause 8. The method of any one of clauses 1-7, wherein the first multi-link device does not receive a frame on the first link while the first multi-link device sends a frame on a second link.

Clause 9. The method of any one of clauses 1-8, wherein the first multi-link device does not transmit a frame on the first link while the first multi-link device receives a frame on a second link.

Clause 10. The method of any one of clauses 1-9, wherein the first power state comprises a doze state and a second power state comprises an awake state.

Clause 11. The method of any one of clauses 1-10, wherein the first field further indicates whether a second station affiliated with a second multi-link device, corresponding to a third link of a second non-simultaneous transmission-reception link pair comprising a second link, is allowed to be in the first power state.

Clause 12. The method of any one of clauses 1-10 , wherein the first field comprises a bitmap comprising a first bit indicating whether the station is allowed to be in the first power state and a second bit indicating whether a second station is allowed to be in the first power state.

Clause 13. The method of any one of clauses 1-10, wherein the first field comprises a bitmap comprising a first bit indicating that there is buffered data to send via the first link of the non-simultaneous transmission-reception link pair, and a second bit indicating that there is buffered data to send via a second link of the non-simultaneous transmission-reception link pair

Clause 14. A computing device comprising one or more processors, and memory storing instructions that, when executed by the one or more processors, cause the computing device to perform the method of any one of clauses 1-13.

Clause 15. A system comprising a computing device configured to perform the method of any one of clauses 1-13, and an access point configured to send the first frame.

Clause 16. A computer-readable medium storing instructions that, when executed, cause performance of the method of any one of clauses 1-13.

Clause 17. A method comprising receiving, by a multi-link device, a first frame comprising a first field indicating whether a station affiliated with a multi-link device, corresponding to a second link of a non-simultaneous transmission-reception link pair, has data to send.

Clause 18. The method of clause 17 further comprising sending, based on the first field, an indication to transition the station to a first power state.

Clause 19. The method of any one of clauses 17-18, further comprising receiving an indication to operate in a non-simultaneous transmission-reception power saving mode.

Clause 20. The method of any one of clauses 17-19, wherein the receiving first frame further comprises receiving a second field indicating a duration for the first power state of the station if the station is allowed to be in the first power state and wherein the sending the indication to transition is further based on the second field.

Clause 21. The method of clause 20, wherein the duration comprises a transmit opportunity (TXOP) duration.

Clause 22. The method of any one of clauses 17-21, wherein the sending the indication to transition the station to the first power state is based on the first field indicating that there is buffered data for transmission via the second link.

Clause 23. A computing device comprising one or more processors, and memory storing instructions that, when executed by the one or more processors, cause the computing device to perform the method of any one of clauses 17-22.

Clause 24. A system comprising a computing device configured to perform the method of any one of clauses 17-22, and an access point configured to send the first frame.

Clause 25. A computer-readable medium storing instructions that, when executed, cause performance of the method of any one of clauses 17-22.

Clause 26. A method comprising receiving, by a multi-link device, a first indication indicating that the multi-link device is to operate in a non-simultaneous transmission-reception power saving mode.

Clause 27. The method of clause 26, further comprising receiving a second indication indicating a change in a power state of a station affiliated with a multi-link device.

Clause 28. The method of any one of clauses 26-27 further comprising sending, based on the first indication and the second indication, an indication to the station to transition to a first power state.

Clause 29. The method of any one of clauses 26-28, wherein receiving the second indication comprises receiving, via a first link, a first frame of a first field that comprises the second indication, and wherein the second indication indicates at least one of data being buffered for transmission via a second link, or the station affiliated with the multi-link device is in the first power state.

Clause 30. The method of any one of clauses 26-29, wherein the first frame further comprises a second field, wherein the second field comprises a duration field indicating a first duration to be used for communicating with the station multi-link device by an access point, via the first link, and after the first frame.

Clause 31. The method of clause 26-30, wherein the receiving the first indication comprises receiving the first indication from an access point multi-link device and via a first link of an non-simultaneous transmission-reception link pair affiliated with the multi-link device.

Clause 32. A computing device comprising one or more processors, and memory storing instructions that, when executed by the one or more processors, cause the computing device to perform the method of any one of clauses 26-31.

Clause 33. A system comprising a computing device configured to perform the method of any one of clauses 26-31, and an access point configured to send the first frame.

Clause 34. A computer-readable medium storing instructions that, when executed, cause performance of the method of any one of clauses 26-31.

Clause 35. A method comprising receiving, by a station (STA) multi-link device (MLD) from an access point (AP) MLD and via a first link of a non-simultaneous transmission-reception link pair for the STA MLD, a first frame comprising a first field used to determine whether a STA affiliated with the STA MLD, corresponding to a second link of the NSTR link pair, is allowed to be in a first power state.

Clause 36. The method of clause 35, further comprising transitioning the STA, by the STA MLD, from a second power state to the first power state based on the first field.

Clause 37. The method of any one of clauses 35-36, wherein the first frame further comprises a second field used to determine a duration for the first power state of the STA when the STA is allowed to be in the first power state.

Clause 38. The method of clause 37, wherein transitioning the STA from the second power state to the first power state is further based on the second field.

Clause 39. The method of any of clauses 37-38, wherein the second field comprises a duration field indicating a first duration to be used for communicating, by the AP and via the first link, with the STA MLD after the first frame.

Clause 40. The method of clause 39, wherein the first duration comprises a transmit opportunity (TXOP) duration.

Clause 41. The method of any of clauses 35-40, wherein the first field comprises an indication of whether the STA is allowed to be in the first power state.

Clause 42. The method of clause 41, wherein transitioning the STA from the second power state to the first power state based on the first field comprises transitioning the STA from the second power state to the first power state when the indication indicates that the STA is allowed to be in the first power state.

Clause 43. The method of clause 42, wherein the indication indicates that the STA is allowed to be in the first power state when the AP MLD does not have buffered traffic for transmission to the STA MLD via the second link.

Clause 44. The method of any one of clauses 42-43, wherein transitioning the STA from the second power state to the first power state based on the first field comprises maintaining the STA in the second power state when the indication indicates that the STA is not allowed to be in the first power state.

Clause 45. The method of clause 44, wherein the indication indicates that the STA is not allowed to be in the first power state when the AP MLD has buffered traffic for transmission to the STA MLD via the second link.

Clause 46. The method of any one of clauses 35-40 wherein the first field comprises an indication of whether the AP MLD has buffered traffic for transmission to the STA MLD via the second link.

Clause 47. The method of clause 46, wherein the STA is allowed to be in the first power state when the indication indicates that the AP MLD does not have buffered traffic for transmission to the STA MLD via the second link.

Clause 48. The method of any one of clauses 46-47, wherein the STA is not allowed to be in the first power state when the indication indicates that the AP MLD has buffered traffic for transmission to the STA MLD via the second link.

Clause 49. The method of any one of clauses 46-47, wherein transitioning the STA from the second power state to the first power state based on the first field comprises transitioning the STA from the second power state to the first power state when the indication indicates that the AP MLD does not have buffered traffic for transmission to the STA MLD via the second link.

Clause 50. The method of any one of clauses 46-49, wherein transitioning the STA from the second power state to the first power state based on the first field comprises maintaining the STA in the second power state when the indication indicates that the AP MLD has buffered traffic for transmission to the STA MLD via the second link.

Clause 51. The method of any one of clauses 35-50, wherein the STA MLD is not able to receive any frame from the AP MLD on the first link while the STA MLD transmits any frame to the AP MLD on the second link.

Clause 52. The method of any one of clauses 35-50, wherein the STA MLD does not transmit any frame to the AP MLD on the first link while the STA MLD receives any frame from the AP MLD on the second link.

Clause 53. The method of any one of clauses 35-52, wherein the first field is further used to determine whether a second STA affiliated with the STA MLD, corresponding to a third link of a second NSTR link pair comprising the first link, is allowed to be in the first power state.

Clause 54. The method of clause 53, wherein the first field comprises a bitmap comprising a first bit used to determine whether the STA is allowed to be in the first power state and a second bit used to determine whether the second STA is allowed to be in the first power state.

Clause 55. The method of clause 53, further comprising sending (e.g., transmitting), by the STA MLD to the AP MLD, a frame indicating a first activation status an NSTR power save (PS) mode for the STA and a second activation status of the NSTR PS mode for the second STA.

Clause 56. The method of clause 54, wherein the first bit is based on the first activation status of the NSTR PS mode for the STA, and wherein the second bit is based on the second activation status of the NSTR PS mode for the second STA.

Clause 57. A computing device comprising one or more processors, and memory storing instructions that, when executed by the one or more processors, cause the computing device to perform the method of any one of clauses 35-56.

Clause 58. A system comprising a computing device configured to perform the method of any one of clauses 35-56, and an access point configured to send the first frame.

Clause 59. A computer-readable medium storing instructions that, when executed, cause performance of the method of any one of clauses 35-56.

Clause 60. A method comprising sending (e.g., transmitting), by an access point (AP) MLD to a station (STA) multi-link device (MLD) and via a first link of a non-simultaneous transmission-reception link pair for the STA MLD, a first frame comprising a first field used to determine whether a STA affiliated with the STA MLD, corresponding to a second link of the NSTR link pair, is allowed to be in a first power state.

Clause 61. The method of clause 60, wherein the first frame further comprises a second field used to determine a duration for the first power state of the STA when the STA is allowed to be in the first power state.

Clause 62. The method of clause 61, further comprising, based on the STA being allowed to be in the first power state based on the first field, sending (e.g., transmitting), by the AP MLD to the STA MLD and via the second link, a second frame after the duration.

Clause 63. The method of clause 61, wherein the second field comprises a duration field indicating a first duration to be used for communicating, by the AP and via the first link, with the STA MLD after the first frame.

Clause 64. The method of clause 63, wherein the first duration comprises a transmit opportunity (TXOP) duration.

Clause 65. The method of any one of clauses 60-64, wherein the first field comprises an indication of whether the STA is allowed to be in the first power state.

Clause 66. The method of clause 65, wherein the indication indicates that the STA is allowed to be in the first power state when the AP MLD does not have buffered traffic for transmission to the STA MLD via the second link.

Clause 67. The method of any one of clauses 65-66, wherein the indication indicates that the STA is not allowed to be in the first power state when the AP MLD has buffered traffic for transmission to the STA MLD via the second link.

Clause 68. The method of any one of clauses 60-64, wherein the first field comprises an indication of whether the AP MLD has buffered traffic for transmission to the STA MLD via the second link.

Clause 69. The method of clause 68, wherein the STA is allowed to be in the first power state when the indication indicates that the AP MLD does not have buffered traffic for transmission to the STA MLD via the second link.

Clause 70. The method of any one of clauses 68-69, wherein the STA is not allowed to be in the first power state when the indication indicates that the AP MLD has buffered traffic for transmission to the STA MLD via the second link.

Clause 71. The method of any one of clauses 61-70, wherein the STA is allowed to be in the first power state based on the first field, the method further comprising sending (e.g., transmitting), by the AP MLD to the STA MLD and via the second link, a second frame after the duration.

Clause 72. The method of clause 71, wherein the second frame comprises a control frame, a management frame, an action frame, or data frame.

Clause 73. The method of any one of clauses 60-72, wherein the AP MLD is not able to receive any frame from the STA MLD on the first link while the AP MLD transmits any frame to the STA MLD on the second link.

Clause 74. The method of any one of clauses 60-73, wherein the AP MLD does not transmit any frame to the STA MLD on the first link while the AP MLD receives any frame from the STA MLD on the second link.

Clause 75. The method of any one of clauses 60-74, wherein the first power state comprises a doze state.

Clause 76. A computing device comprising one or more processors, and memory storing instructions that, when executed by the one or more processors, cause the computing device to perform the method of any one of clauses 60-75.

Clause 77. A system comprising a computing device configured to perform the method of any one of clauses 60-75, and a station multi-link device configured to receive the first frame.

Clause 78. A computer-readable medium storing instructions that, when executed, cause performance of the method of any one of clauses 60-75.

A computing device may perform a method comprising multiple operations. A computing device may be configured as a multi-link device. A multilink device may receive a first frame comprising a first field indicating whether a station affiliated with a multi-link device, corresponding to a first link of a non-simultaneous transmission-reception link pair, is allowed to be in a first power state. The multi-link device may send (e.g., transmit), based on the first field, an indication to transition the station to the first power state. The multi-link device may receive an indication to operate in a non-simultaneous transmission-reception power saving mode. The first frame may further comprise a second field indicating a duration of the first power state of the station. The multi-link device sending the indication may be further based on the second field. The duration of the first power state of the station may comprise a transmit opportunity duration. The multi-link device may receive the first frame, via a second link, from an access point multi-link device of the non-simultaneous transmission-reception link pair. The multi-link device sending the indication to transition the station to the first power state may be based on the first field indicating that there is buffered data for transmission via the first link. A station affiliated with the multi-link device may receive a frame from an access point multi-link device on a second link based on the station affiliated with the multi-link device sending a frame to the access point multi-link device on the first link. A station affiliated with the multi-link device may send a frame to an access point multi-link device on a second link based on the station affiliated with the first multi-link device receiving a frame from the access point multi-link device on the first link. The first power state may comprise a doze state. A second power state may comprise an awake state. The first field may further indicate whether a second station affiliated with a second multi-link device, corresponding to a third link of a second non-simultaneous transmission-reception link pair comprising a second link, may be allowed to be in the first power state. The first field may comprise a bitmap comprising a first bit indicating whether the station is allowed to be in the first power state and a second bit indicating whether the second station may be in the first power state. The computing device may comprise one or more processors, and memory storing instructions that, when executed by the one or more processors, may cause the computing device to perform the described method, additional operations, and/or include additional elements. A system may comprise a computing device configured to perform the described method, additional operations, and/or include additional elements and an access point configured to send the first frame. A computer-readable medium may store instructions that, when executed, cause performance of the described method, additional operations, and/or include the additional elements .

A computing device may perform a method comprising multiple operations. A computing device may be configured as a multi-link device. A multi-link device may receive a first frame comprising a first field indicating whether a station affiliated with a multi-link device, corresponding to a second link of a non-simultaneous transmission-reception link pair, has data to send. The multi-link device may send, based on the first field, an indication to transition the station to a first power state. The multi-link device may receive an indication to operate in a non-simultaneous transmission-reception power saving mode. The multi-link device may receive a second field indicating a duration for the first power state of the station if the station is allowed to be in the first power state. The multi-link device sending the indication to transition may be further based on the second field. The duration may comprise a transmit opportunity (TXOP) duration. The multi-link device sending the indication to transition the station to the first power state may be based on the first field indicating that there may be buffered data for transmission via the second link. The computing device may comprise one or more processors, and memory storing instructions that, when executed by the one or more processors, may cause the computing device to perform the described method, additional operations, and/or include additional elements. A system may comprise a computing device configured to perform the described method, additional operations, and/or include additional elements and an access point configured to send the first frame. A computer-readable medium may store instructions that, when executed, cause performance of the described method, additional operations, and/or include the additional elements .

A computing device may perform a method comprising multiple operations. A computing device may be configured as a multi-link device. A multi-link device may receive, by, a first indication that may indicate that the multi-link device may operate in a non-simultaneous transmission-reception power saving mode. The multi-link device may receive a second indication that may indicate a change in a power state of a station affiliated with a multi-link device. The multi-link device may send, based on the first indication and/or the second indication, an indication to the station to transition to a first power state. The multi-link device receiving the second indication may comprise receiving, via a first link, a first frame of a first field that may comprise the second indication, and wherein the second indication may indicate at least one of data being buffered for transmission via a second link, or the station affiliated with the multi-link device being in the first power state. The first frame may further comprise a second field, wherein the second field may comprise a duration field that may indicate a first duration to be used for communicating with the station multi-link device by an access point, via the first link, and after the first frame. The multi-link device receiving the first indication may comprise receiving the first indication from an access point multi-link device and via a first link of an non-simultaneous transmission-reception link pair affiliated with the multi-link device. The computing device may comprise one or more processors, and memory storing instructions that, when executed by the one or more processors, may cause the computing device to perform the described method, additional operations, and/or include additional elements. A system may comprise a computing device configured to perform the described method, additional operations, and/or include additional elements and an access point configured to send the first frame. A computer-readable medium may store instructions that, when executed, cause performance of the described method, additional operations, and/or include the additional elements.

A computing device may perform a method comprising multiple operations. A computing device may be configured as a multi-link device. The multi-link device may be a station (STA) multi-link device (MLD). The STA MLD may receive, from an access point (AP) MLD and via a first link of a non-simultaneous transmission-reception link pair for the STA MLD, a first frame that may comprise a first field that may be used to determine whether a STA affiliated with the STA MLD, corresponding to a second link of the NSTR link pair, may be in a first power state. A STA affiliated with the STA MLD may transition from a second power state to the first power state based on the first field. The first frame may further comprise a second field that may be used to determine a duration for the first power state of the STA if the STA may be in the first power state. The STA transitioning from the second power state to the first power state may be further based on the second field. The second field may comprise a duration field that may indicate a first duration that may be used for communicating, by the AP and via the first link, with the STA MLD after the first frame. The first duration may comprise a transmit opportunity (TXOP) duration. The first field may comprise an indication of whether the STA may be in the first power state. The STA transitioning from the second power state to the first power state based on the first field may comprise transitioning the STA from the second power state to the first power state if the indication indicates that the STA may be in the first power state. The indication may indicate that the STA may be in the first power state when the AP MLD does not have buffered traffic for transmission to the STA MLD via the second link. The STA transitioning from the second power state to the first power state based on the first field may comprise maintaining the STA in the second power state when the indication indicates that the STA is not allowed to be in the first power state. The indication may indicate that the STA may be in the first power state when the AP MLD has buffered traffic for transmission to the STA MLD via the second link. The first field may comprise an indication of whether the AP MLD has buffered traffic for transmission to the STA MLD via the second link. The STA may be in the first power state if the indication indicates that the AP MLD does not have buffered traffic for transmission to the STA MLD via the second link. The STA may be in the first power state if the indication indicates that the AP MLD has buffered traffic for transmission to the STA MLD via the second link. The STA transitioning from the second power state to the first power state, based on the first field, may comprise transitioning the STA from the second power state to the first power state if the indication indicates that the AP MLD does not have buffered traffic for transmission to the STA MLD via the second link. The STA transitioning from the second power state to the first power state, based on the first field, may comprise maintaining the STA in the second power state if the indication indicates that the AP MLD has buffered traffic for transmission to the STA MLD via the second link. The STA MLD may not be able to receive any frame from the AP MLD on the first link if the STA MLD sends (e.g., transmits) any frame to the AP MLD on the second link. The STA MLD may not send (e.g., transmit) a frame to the AP MLD on the first link if the STA MLD is receiving any frame from the AP MLD on the second link. The first field may be further used to determine whether a second STA affiliated with the STA MLD, corresponding to a third link of a second NSTR link pair comprising the first link, may be in the first power state. The first field may comprise a bitmap that may comprise a first bit that may be used to determine whether the STA is allowed to be in the first power state and a second bit used to determine whether the second STA is allowed to be in the first power state. The STA MLD may send (e.g., transmit), by the STA MLD to the AP MLD, a frame that may indicate a first activation status an NSTR power save (PS) mode for the STA and a second activation status of the NSTR PS mode for the second STA. The first bit may be based on the first activation status of the NSTR PS mode for the STA, and wherein the second bit may be based on the second activation status of the NSTR PS mode for the second STA. The computing device may comprise one or more processors, and memory storing instructions that, when executed by the one or more processors, may cause the computing device to perform the described method, additional operations, and/or include additional elements. A system may comprise a computing device configured to perform the described method, additional operations, and/or include additional elements and an access point configured to send the first frame. A computer-readable medium may store instructions that, when executed, cause performance of the described method, additional operations, and/or include the additional elements.

A computing device may perform a method comprising multiple operations. A computing device may be configured as a multi-link device (MLD). The multi-link device may be an access point (AP) MLD. The AP MLD may send (e.g., transmit), to a station (STA) multi-link device (MLD), a first frame comprising a first field that may be used to determine whether a station (STA) affiliated with the STA MLD, corresponding to a second link of the NSTR link pair, may be in a first power state. The AP MLD may send the first frame, via a first link of a non-simultaneous transmission-reception link pair of the STA MLD. The first frame may further comprise a second field that may be used to determine a duration for the first power state of the STA if the STA is allowed to be in the first power state. The AP MLD may send (e.g., transmit), based on the first field and to the STA MLD, a second frame after the duration. The AP MLD may send the second frame via the second link. The second field may comprise a duration field that may indicate a first duration that may be used for communicating, by the AP and via the first link, with the STA MLD after, or in response to, the first frame. The first duration may comprise a transmit opportunity (TXOP) duration. The first field may comprise an indication of whether the STA may be in the first power state. The indication may indicate that the STA may be in the first power state if the AP MLD does not have buffered traffic for transmission to the STA MLD via the second link. The indication may indicate that the STA may be in the first power state if the AP MLD has buffered traffic for transmission to the STA MLD via the second link. The first field may comprise an indication of whether the AP MLD has buffered traffic for transmission to the STA MLD via the second link. The STA may be in the first power state if the indication indicates that the AP MLD does not have buffered traffic for transmission to the STA MLD via the second link. The STA may not be in the first power state if the indication indicates that the AP MLD has buffered traffic for transmission to the STA MLD via the second link. The STA may be in the first power state based on the first field. The STA may send (e.g., transmit), by the AP MLD to the STA MLD and via the second link, a second frame after the duration. The second frame may comprise a control frame, a management frame, an action frame, or data frame. The AP MLD may not be able to receive any frame from the STA MLD on the first link if the AP MLD sends (e.g., transmits) any frame to the STA MLD on the second link. The AP MLD may not transmit any frame to the STA MLD on the first link if the AP MLD receives any frame from the STA MLD on the second link. The first power state may comprise a doze state. The computing device may comprise one or more processors, and memory storing instructions that, when executed by the one or more processors, may cause the computing device to perform the described method, additional operations, and/or include additional elements. A system may comprise a computing device configured to perform the described method, additional operations, and/or include additional elements and an station configured to receive the first frame. A computer-readable medium may store instructions that, when executed, cause performance of the described method, additional operations, and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

An access point (and an AP MLD) may communicate with one or more wireless devices (e.g., computing device(s), non-AP MLD(s), station(s), etc.). Computing devices described herein may support multiple technologies, and/or multiple releases of the same technology. Computing devices may have some specific capability(ies) depending on wireless device category and/or capability(ies). Computing devices referred to herein may correspond to a plurality of computing devices compatible with a given LTE, 5G, 3GPP or non-3GPP release, IEEE 802.11 Standard(s) (e.g., IEEE 802.11be, beyond IEEE 802.11be), or Wi-Fi Alliance (WFA) Standard(s) (e.g., Wi-Fi 7, Wi-Fi 8) technology. A plurality of computing devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of access points and/or a plurality of wireless devices in a coverage area that may not comply with the disclosed methods, for example, because those wireless devices and/or access points may perform based on other (e.g., older or newer) releases of LTE, 5G, 6G, 3GPP or non-3GPP, IEEE 802.11 Standards (e.g., IEEE 802.11be, beyond IEEE 802.11be), or Wi-Fi Alliance (WFA) Standards (e.g., Wi-Fi 7, Wi-Fi 8) technology.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. That perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as access points (APs), AP multi-link devices(MLDs), stations (stations), non-AP stations, non-AP MLDs, base stations, wireless devices or user equipment (wireless device), servers, switches, antennas, and/or the like. A network may comprise any wireless technology, including but not limited to, cellular, wireless, Wi-Fi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method comprising:
receiving, by a first multi-link device, a first frame comprising a first field indicating whether a station affiliated with a multi-link device, corresponding to a first link of a non-simultaneous transmission-reception link pair, is allowed to be in a first power state; and
sending, based on the first field, an indication to transition the station to the first power state.

2. The method of claim 1, further comprising receiving an indication to operate in a non-simultaneous transmission-reception power saving mode.

3. The method of any one of claims 1-2, wherein the first frame further comprises a second field indicating a duration of the first power state of the station; and wherein the sending is further based on the second field.

4. The method of claim 3, wherein the duration of the first power state of the station comprises a transmit opportunity duration.

5. The method of any one of claims 1-4, wherein the receiving is, via a second link, from an access point multi-link device of the non-simultaneous transmission-reception link pair.

6. The method of any one of claims 1-5, wherein the sending the indication to transition the station to the first power state is based on the first field indicating that there is buffered data for transmission via the first link.

7. The method of any one of claims 1-6, wherein the first multi-link device does not receive a frame on the first link while the first multi-link device sends a frame on a second link.

8. The method of any one of claims 1-7, wherein the first multi-link device does not transmit a frame on the first link while the first multi-link device receives a frame on a second link.

9. The method of claim any one of claims 1-8, wherein the first power state comprises a doze state and a second power state comprises an awake state.

10. The method of any one of claims 1-9, wherein the first field further indicates whether a second station affiliated with a second multi-link device, corresponding to a third link of a second non-simultaneous transmission-reception link pair comprising a second link, is allowed to be in the first power state.

11. The method of any one of claims 1-9, wherein the first field comprises a bitmap comprising a first bit indicating whether the station is allowed to be in the first power state and a second bit indicating whether a second station is allowed to be in the first power state.

12. The method of any one of claims 1-9, wherein the first field comprises a bitmap comprising a first bit indicating that there is buffered data to send via the first link of the non-simultaneous transmission-reception link pair, and a second bit indicating that there is buffered data to send via a second link of the non-simultaneous transmission-reception link pair

13. A computing device comprising:
one or more processors; and
memory storing instructions that, when executed by the one or more processors, cause the computing device to perform the method of any one of claims 1-12.

14. A system comprising:
a computing device configured to perform the method of any one of claims 1-12; and
an access point configured to send the first frame.

15. A computer-readable medium storing instructions that, when executed, cause performance of the method of any one of claims 1-12.
